# FASCICULE DE BREVET EUROPEEN

(11) **EP 4 068 679 B1**
(45) Date de publication et mention de la délivrance du brevet: **25.02.2026**
(21) Numéro de dépôt: 22161865.5
(22) Date de dépôt: 14.03.2022
(51) Int. Cl.: H04L 9/08, H04L 9/32

(54) **AUTHENTIFICATION D'UN DISPOSITIF PAR UN TRAITEMENT CRYPTOGRAPHIQUE**
AUTHENTIFIZIERUNG EINER VORRICHTUNG DURCH KRYPTOGRAPHISCHE VERARBEITUNG
AUTHENTICATION OF A DEVICE BY CRYPTOGRAPHIC PROCESSING

(30) Priorité: 02.04.2021 FR 2103451
(43) Date de publication de la demande: 05.10.2022
(73) Titulaire: IDEMIA France, 92400 Courbevoie (FR)
(72) Inventeur: DOTTAX, Emmanuelle, 92400 COURBEVOIE (FR); BETTALE, Luk, 92400 COURBEVOIE (FR); REBOUD, Nathan, 92400 COURBEVOIE (FR)
(74) Mandataire: Idemia

(56) Documents cités:
- CN-A- 110 855 616
- US-A1- 2015 256 518
- US-A1- 2017 330 402
- US-A1- 2019 268 169

## Description

### Domaine Technique

L'invention se rapporte au domaine de la cryptographie et concerne plus particulièrement la mise en œuvre de traitements cryptographiques pour authentifier un premier dispositif auprès d'un deuxième dispositif.

### Technique antérieure

Les dispositifs numériques (appelés aussi dispositif d'ordinateur ou appareils digitaux), tels que ordinateurs, tablettes, cartes à puce, téléphones portables, objets connectés etc. sont omniprésents dans la vie quotidienne. Ces dispositifs nécessitent souvent la mise en œuvre de solutions de sécurisation pour protéger l'accès au dispositif et sécuriser des données sensibles contre d'éventuelles attaques.

Une solution de sécurisation courante consiste à embarquer dans de tels dispositifs un élément sécurisé (dit « secure element » en anglais). Comme défini par l'organisme de standardisation « GlobalPlatform » bien connu de l'homme du métier, un élément sécurisé est une plateforme matérielle et logicielle configurée pour héberger de façon sécurisée des applications et leurs données sensibles associées (clés cryptographiques, algorithmes...), en conformité avec des règles fixées par une autorité tierce de confiance. Un élément sécurisé fournit un environnement d'exécution sécurisé à des applications. Il peut prendre diverses formes matérielles, telles qu'un module UICC (pour « Universal Integrated Circuit Card »), un élément sécurisé embarqué (ou « embedded SE » ou encore « eSIM ») ou encore une carte microSD. Un module UICC et une carte microSD sont généralement amovibles. Chaque forme d'élément sécurisé est destinée à être utilisée dans des applications bien particulières et doit répondre à des exigences propres au marché concerné.

Les éléments sécurisés offrent un bon niveau de protection mais leur déploiement est complexe et contraignant dans la mesure où cela nécessite des équipements et des services bien particuliers fournis par des acteurs spécialisés. Le recours à des éléments sécurisés pour sécuriser des dispositifs rend la mise en œuvre et l'exploitation plus compliquées et n'est donc pas toujours souhaitable.

Une autre solution consiste à implémenter des applications dans des appareils ouverts tels que PC, tablettes ou smartphones, sans utiliser d'éléments sécurisés. Cela permet d'accéder à de nouveaux marchés et de faciliter le déploiement des applications. Pour sécuriser des dispositifs ouverts, des solutions purement logicielles, de type cryptographique par exemple, doivent être mises en œuvre.

Un défi en termes de sécurité se pose cependant en ce que le code source et les données mises en œuvre dans des dispositifs ouverts (sans utiliser d'éléments sécurisés) sont susceptibles d'être accessibles par des hackeurs potentiels. Les dispositifs ouverts peuvent être exposés à des attaques « en boîte blanche » dans le sens où l'attaquant a un accès complet à l'implémentation logicielle d'un algorithme cryptographique : le binaire est alors complètement visible et modifiable par l'attaquant et celui-ci a le plein contrôle de la plateforme d'exécution. Par conséquent, il est nécessaire de sécuriser suffisamment l'implémentation logicielle des applications dans les dispositifs ouverts.

Diverses solutions logicielles connues permettent de sécuriser un dispositif ouvert, parmi elles la cryptographie « en boîte blanche » (ou cryptographique en « *white-box* »)*.* Les solutions cryptographiques implémentées en boîte blanche reposent sur la mise en œuvre d'un algorithme cryptographique tout en protégeant les clés cryptographiques secrètes qui sont utilisées. La cryptographie en boîte blanche peut être appliquée à un quelconque algorithme cryptographique utilisé dans une application que l'on souhaite protéger. L'implémentation en boite blanche d'un algorithme cryptographique consiste à modifier (complexifier, masquer,...) l'implémentation de l'algorithme en question, par exemple en changeant les représentations internes des fonctions et des données mises en jeu, de sorte à protéger les clés secrètes utilisées. L'implémentation en boite blanche peut également consister, par exemple, à intégrer un secret (sous la forme de données, mais aussi sous la forme de code) et des données aléatoires instanciées au moment de la compilation dans une composition dont il est alors difficile de déduire ledit secret. A titre d'exemple, une implémentation en boîte blanche d'un algorithme de chiffrement AES (pour « Advanced Encryption Standard » en anglais) peut être utilisée dans une application pour authentifier un utilisateur.

Cependant, un problème de sécurité se pose en ce que, même lorsqu'ils sont implémentés en boîte blanche, les algorithmes cryptographiques peuvent être vulnérables à certaines attaques (attaques statistiques), sous réserves que les attaquants déploient les ressources nécessaires. De telles attaques sont possibles notamment lorsque les agresseurs sont capables de surveiller l'exécution de l'application à partir de la mémoire.

Dans le cas où un attaquant parvient à découvrir la ou les clés cryptographiques d'un algorithme cryptographique implémenté en boîte blanche, il est nécessaire pour le fournisseur de l'application concernée d'utiliser une nouvelle implémentation en boîte blanche, selon un design différent, afin de sécuriser à nouveau l'algorithme cryptographique en question et un nouveau secret associé. Ceci pose problème dans la mesure où le nombre d'implémentations possibles en boîte blanche pour un algorithme donné est relativement limité. Le fournisseur a donc une liberté très réduite lorsqu'il s'agit de choisir ou modifier une implémentation en boîte blanche d'un algorithme cryptographique. Il peut donc devenir rapidement difficile de sécuriser un algorithme cryptographique exposé à des attaques.

Aussi, il est souhaitable de sécuriser suffisamment un algorithme cryptographique de sorte à ce que la ou les clés cryptographiques utilisées soient protégées efficacement contre des attaques éventuelles. De plus, lorsqu'un attaquant réussit une attaque contre un algorithme cryptographique utilisé pour protéger une application donnée, il est nécessaire de pouvoir facilement adapter l'implémentation logicielle afin de pouvoir sécuriser au mieux l'application en question.

En outre, lorsqu'un algorithme cryptographique est utilisé pour protéger un protocole ou une application donnée, il est souhaitable de pouvoir adapter au besoin l'implémentation logicielle de l'algorithme cryptographique sans que cela impacte le protocole ou l'application donnée (donc avec un minimum d'impact pour le protocole ou l'application en question).

CN 110 855 616 A décrit une méthode d'obtention d'une clef numérique par un client, cette clef numérique étant par la suite utilisée par ce client pour déverrouiller un véhicule. US 2019/268169 A1 décrit une méthode de provisionnement d'un terminal de communication de sorte à permettre à ce terminal d'accéder aux ressources d'un véhicule. US 2015/256518 A1 décrit une méthode d'accès et de traitement sécurisé de données comprenant la génération d'une clef « plaintext » par déchiffrement d'une clef chiffrée. US 2017/330402 A1 décrit un procédé de transmission et de stockage sécurisé d'une clé virtuelle pour l'authentification d'un terminal mobile auprès d'une unité de contrôle de véhicule, comprenant la fourniture d'une application et d'un environnement logiciel chiffré sur le mobile, le chiffrement et le stockage de la clé virtuelle dans cet environnement avec recours à de la cryptographie en boîte blanche et l'utilisation d'un protocole challenge-réponse pour vérifier l'authenticité du mobile.

### Exposé de l'invention

A cet effet, la présente invention concerne un procédé de traitement mis en œuvre par un premier dispositif coopérant avec un deuxième dispositif, ledit procédé comprenant :
a) réception, en provenance du deuxième dispositif, de premières données comprenant une première donnée de défi ;
b) obtention de données de clé comprenant une clé cryptographique chiffrée résultant d'un chiffrement par un premier algorithme de chiffrement, lesdites données de clé étant masquées par exécution d'une fonction cryptographique de masquage à partir de la clé cryptographique chiffrée et d'une clé de masquage ;
c) réception, en provenance du deuxième dispositif, d'une clé de démasquage ;
d) détermination de la clé cryptographique chiffrée en exécutant une fonction cryptographique de démasquage à partir des données de clé obtenues en b) et de la clé de démasquage reçue en c) ;
e) détermination d'une clé cryptographique déchiffrée par un déchiffrement en exécutant un premier algorithme de déchiffrement implémenté en boîte blanche à partir de la clé cryptographique chiffrée ;
f) détermination d'une donnée de réponse par une opération cryptographique en exécutant un algorithme cryptographique prédéterminé à partir de la clé cryptographique déchiffrée et de la première donnée de défi reçue ; et
g) envoi au deuxième dispositif, en réponse aux premières données reçues en a), de la donnée de réponse pour authentifier le premier dispositif auprès du deuxième dispositif.

La présente invention permet avantageusement d'authentifier de façon sécurisée et flexible un premier dispositif auprès d'un deuxième dispositif. L'invention permet en particulier de sécuriser un algorithme cryptographique quelconque de façon efficace et avec davantage de liberté dans l'implémentation logicielle utilisée.

L'invention permet de sécuriser un algorithme cryptographique de sorte à ce que la ou les clés cryptographiques utilisées soient protégées efficacement contre des attaques éventuelles. De plus, lorsqu'un attaquant réussit une attaque contre un algorithme cryptographique utilisé pour protéger une application donnée, il est possible grâce à l'invention d'adapter facilement l'implémentation logicielle afin de pouvoir sécuriser au mieux l'application en question.

En outre, lorsqu'un algorithme cryptographique est utilisé pour protéger un protocole ou une application donnée, l'invention permet d'adapter au besoin l'implémentation logicielle de l'algorithme cryptographique sans que cela impacte le protocole ou l'application donnée (donc avec un minimum d'impact pour le protocole ou l'application en question).

Selon un mode de réalisation particulier, le premier algorithme de chiffrement et le premier algorithme de déchiffrement sont des algorithmes cryptographiques associés configurées pour effectuer des fonctions cryptographiques inverses.

Selon un mode de réalisation particulier, les premiers algorithmes de chiffrement et de déchiffrement sont différents de l'algorithme cryptographique prédéterminé.

Selon un mode de réalisation particulier, le procédé comprend en outre, avant la réception c) de la clé de démasquage :
h) envoi, au deuxième dispositif, de deuxièmes données comprenant une deuxième donnée de défi ;
dans lequel la clé de démasquage reçue en c) depuis le deuxième dispositif est calculée à partir de la deuxième donnée de défi.

Selon un mode de réalisation particulier, le procédé comprend, avant h) :
i) obtention d'un jeton numérique, comprenant :
   - les données de clé ;
   - une première donnée temporelle indiquant une période de validité au cours de laquelle la clé cryptographique est valide ; et
   - un identifiant de ladite clé cryptographique utilisable pendant ladite période de validité ;
   dans lequel les deuxième données envoyées en h) comprennent la première donnée temporelle et l'identifiant extraits du jeton numérique.

Selon un mode de réalisation particulier, le procédé comprend en outre :
j) sélection, à partir d'une deuxième donnée temporelle comprise dans les premières données reçue en a), du jeton numérique obtenu en i) parmi un ou des jetons numériques accessibles par le premier dispositif,
ladite deuxième donnée temporelle étant indicative d'une période de validité dans laquelle la clé cryptographique, du jeton numérique sélectionné, doit être valide.

Selon un mode de réalisation particulier, le jeton numérique obtenue en i) comprend en outre la deuxième donnée de défi qui est distincte de la première donnée temporelle et de l'identifiant ;
dans lequel les deuxièmes données envoyées en h) comprennent la deuxième donnée de défi extraite du jeton numérique.

Selon un mode de réalisation particulier, la première donnée temporelle et l'identifiant compris dans les deuxièmes données envoyées en h) constituent la deuxième donnée de défi.

Selon un mode de réalisation particulier, le jeton numérique comprend en outre une clé encodée dans un format adapté à l'implémentation en boîte blanche,
dans lequel, en e), la clé cryptographique déchiffrée est déterminée par un déchiffrement en exécutant le premier algorithme de déchiffrement implémenté en boîte blanche à partir de la clé cryptographique chiffrée et de la clé encodée dans un format adapté à l'implémentation en boîte blanche extraite du jeton numérique.

Selon un mode de réalisation particulier, les fonctions cryptographiques de masquage et de démasquage sont respectivement des fonctions associées de chiffrement et de déchiffrement.

Selon un mode de réalisation particulier, les fonctions cryptographiques de masquage et de démasquage sont des fonctions de chiffrement symétriques, la clé de masquage et la clé de démasquage étant identiques.

Selon un mode de réalisation particulier, les fonctions cryptographiques de masquage et de démasquage sont des fonctions XOR.

Selon un mode de réalisation particulier, le procédé comprend, suite à g) :
k) en réponse à une détection que le premier dispositif est authentifié avec succès auprès du deuxième dispositif, déclenchement d'une fonction prédéterminée en coopération avec le deuxième dispositif.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif (dit « premier dispositif ») ou plus généralement dans un ordinateur, ce programme comportant des instructions adaptées à la mise en œuvre des étapes d'un procédé de traitement tel que défini dans le présent document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que défini dans ce document.

Le support d'informations peut être n'importe quelle entité ou dispositif capable de stocker le programme. Par exemple, le support peut comporter un moyen de stockage, tel qu'une mémoire non volatile réinscriptible ou ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

La présente invention vise également un dispositif, dit premier dispositif, apte à mettre en œuvre le procédé de traitement tel que défini dans le présent document. En particulier, l'invention prévoit un premier dispositif apte à coopérer avec un deuxième dispositif, comprenant :
- un premier module de réception, en provenance du deuxième dispositif, configuré pour recevoir des premières données comprenant une première donnée de défi ;
- un module d'obtention configuré pour obtenir des données de clé comprenant une clé cryptographique chiffrée résultant d'un chiffrement par un premier algorithme de chiffrement, lesdites données de clé étant masquées par exécution d'une fonction cryptographique de masquage à partir de la clé cryptographique chiffrée et d'une clé de masquage ;
- un deuxième module de réception configuré pour recevoir, en provenance du deuxième dispositif, une clé de démasquage ;
- un premier module de détermination configuré pour déterminer la clé cryptographique chiffrée en exécutant une fonction cryptographique de démasquage à partir des données de clé obtenues et de la clé de démasquage reçue ;
- un deuxième module de détermination configuré pour déterminer une clé cryptographique déchiffrée par un déchiffrement en exécutant un premier algorithme de déchiffrement implémenté en boîte blanche à partir de la clé cryptographique chiffrée ;
- un troisième module de détermination configuré pour déterminer une donnée de réponse par une opération cryptographique en exécutant un algorithme cryptographique prédéterminé à partir de la clé cryptographique déchiffrée et de la première donnée de défi reçue ; et
- un module d'envoi configuré pour envoyer au deuxième dispositif, en réponse aux premières données reçues, la donnée de réponse pour authentifier le premier dispositif auprès du deuxième dispositif.

A noter que les différents modes de réalisation mentionnés ci-avant (ainsi que ceux décrits ci-après) en relation avec le procédé de traitement de l'invention ainsi que les avantages associés s'appliquent de façon analogue au premier dispositif de l'invention.

Pour chaque étape du procédé de traitement, le premier dispositif de l'invention peut comprendre un module correspondant configuré pour réaliser ladite étape.

Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel peut être exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement un procédé d'authentification d'un premier dispositif auprès d'un deuxième dispositif selon un premier exemple ;
[Fig. 2] La figure 2 représente schématiquement un environnement dans lequel un premier dispositif coopère avec un deuxième dispositif et un serveur distant, selon un mode de réalisation particulier ;
[Fig. 3] La figure 3 représente schématiquement la structure d'un premier dispositif selon un mode de réalisation particulier de l'invention ;
[Fig. 4] La figure 4 représente schématiquement la structure d'un deuxième dispositif selon un mode de réalisation particulier de l'invention ;
[Fig. 5] La figure 5 représente schématiquement des modules mis en œuvre par un premier dispositif selon un mode de réalisation particulier de l'invention ;
[Fig. 6] La figure 6 représente, sous forme d'un diagramme, les étapes d'un procédé de traitement selon un mode de réalisation particulier de l'invention ;
[Fig. 7] La figure 7 représente, sous forme d'un diagramme, les étapes d'un procédé de traitement selon un mode de réalisation particulier de l'invention ;
[Fig. 8] La figure 8 représente, sous forme d'un diagramme, une variante du procédé de traitement représenté en figure 6.

### Description des modes de réalisation

Comme déjà indiqué, le présent document concerne l'authentification d'un premier dispositif, et plus généralement d'un utilisateur de ce premier dispositif, auprès d'un deuxième dispositif, en vue par exemple d'accéder à un quelconque service ou une quelconque fonction.

Les modes de réalisation décrits ci-dessous s'inscrivent dans le cadre d'un contrôle d'accès à un véhicule, tel qu'une voiture par exemple. Ainsi, un premier dispositif est utilisé par un utilisateur pour s'authentifier auprès d'un deuxième dispositif contrôlant l'accès à un véhicule. On comprend toutefois que la présente invention s'applique plus généralement à un traitement cryptographique permettant à un quelconque premier dispositif de s'authentifier auprès d'un quelconque autre, dit second, dispositif. A titre d'exemple, le second dispositif de l'invention est configuré pour contrôler une quelconque fonctionnalité d'un véhicule, tel que le contrôle des portes ou le contrôle marche/arrêt du véhicule. Le deuxième dispositif peut de façon analogue contrôler les portes d'une maison, contrôler des portiques de sécurité, contrôler l'accès à des transports ou encore l'accès à des services internet, à des consoles de jeu, etc.

La nature des premier et second dispositifs peut varier selon la ou les applications envisagées. Le premier dispositif peut par exemple être un terminal, tel qu'un téléphone mobile, tablette, ordinateur, etc., ou encore une clé USB ou équivalent.

L'invention propose de renforcer la sécurité d'une authentification d'un premier dispositif auprès d'un deuxième dispositif au moyen en particulier d'un algorithme cryptographique implémenté en boîte blanche permettant de protéger une clé cryptographique utilisée pour l'authentification. Pour ce faire, un premier dispositif coopère avec un deuxième dispositif afin de s'authentifier auprès de ce dernier. Au cours d'un procédé de traitement (ou procédé d'authentification), le premier dispositif réalise un démasquage d'une clé cryptographique chiffrée dont il dispose, en utilisant une clé de démasquage fournie par le deuxième dispositif lors d'une interaction préalable entre les premier et deuxième dispositifs. Le premier dispositif déchiffre ensuite la clé cryptographique chiffrée ainsi obtenue, en exécutant un algorithme de déchiffrement implémenté en boîte blanche. Le premier dispositif peut alors générer, à partir de cette clé cryptographique déchiffrée et d'une donnée de défi fournie au préalable par le deuxième dispositif, une réponse en exécutant un algorithme cryptographique prédéterminé. L'envoi de cette réponse au deuxième dispositif, en réponse à la première donnée de défi, permet au premier dispositif de s'authentifier auprès du deuxième dispositif, ce dernier étant capable de vérifier la validité de la réponse et d'en déduire si l'authentification est passée avec succès ou échoue.

D'autres aspects et avantages de la présente invention ressortiront des exemples de réalisation décrits ci-dessous en référence aux dessins mentionnés ci-avant.

Comme déjà indiqué, la cryptographie en boîte blanche est une technique bien connue consistant à mettre en œuvre la fonctionnalité d'un algorithme cryptographique donné, mais en adaptant l'implémentation de cet algorithme de sorte à utiliser une implémentation sécurisée, dite implémentation en boîte blanche. Il est fait référence par exemple à l'ouvrage de référence suivant : *«* White-Box Cryptography and an AES Implementation » (Stanley Chow, Philip A. Eisen, Harold Johnson, and Paul C. van Oorschot ; In Kaisa Nyberg and Howard M.Heys, editors ; Selected Areas in Cryptography, volume 2595 of Lecture Notes in Computer Science, pages 250-270. Springer, 2002; https://eprint.iacr.org/2013/104.pdf).

Les spécifications officielles (dans les standards, normes,...) des algorithmes cryptographiques fournissent une description des fonctions mathématiques mises en œuvre dans les calculs de ces algorithmes (par exemple, l'algorithme AES est standardisé par le « National Institue of Standards and Technology » (NIST)). L'implémentation en boîte blanche de tels algorithmes cryptographiques vise à modifier ces descriptions, par exemple en changeant les représentations internes des fonctions ou données mises en œuvre dans ces algorithmes pour dissimuler des secrets dans le code de l'implémentation pour protéger les secrets contre d'éventuelles attaques. Par exemple, des tables peuvent être utilisées pour intégrer à la fois des clés secrètes (sous la forme de données et/ou sous la forme de code) et des données aléatoires avec une fonction dont il est alors difficile de déduire les clés secrètes. Le principe général d'une implémentation en boîte blanche d'un algorithme cryptographique donné étant bien connu de l'homme du métier, il ne sera donc pas décrit plus en détail dans ce document.

Comme déjà indiqué, la déposante a constaté que les techniques actuelles d'algorithmes cryptographiques implémentés en boîte blanche, offrent certes des avantages en termes de sécurité, mais impliquent également des contraintes et des limites dans leur capacité à protéger efficacement un protocole ou une application. Ceci résulte notamment du fait que les algorithmes cryptographiques implémentés en boîte blanche sont généralement utilisés par des protocoles ou des applications que l'on souhaite protéger, comme expliqué ci-après.

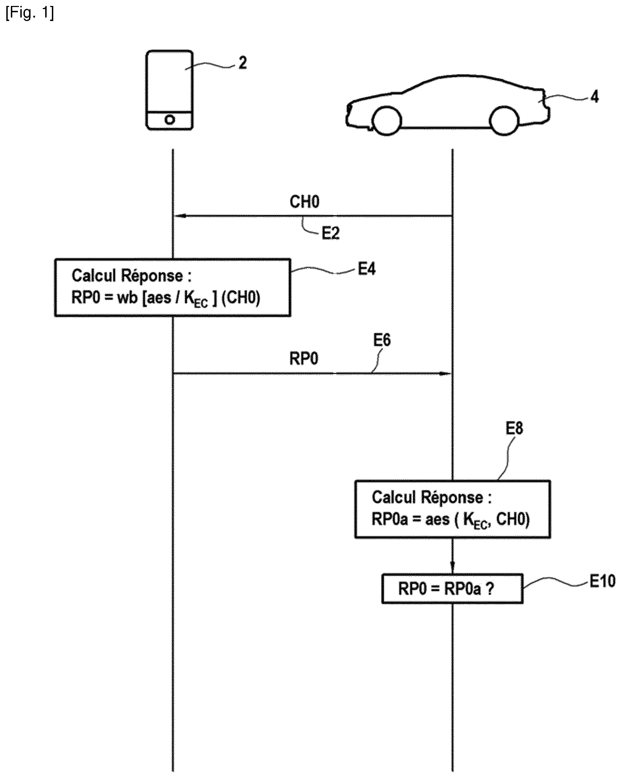

La **figure 1** représente schématiquement une première solution selon laquelle un algorithme MAC (pour « Message Authentication Code » en anglais) à base d'AES (pour « Advanced Encryption Standard ») implémenté en boîte blanche est utilisé par un premier dispositif 2 (un terminal dans cet exemple) pour s'authentifier auprès d'un deuxième dispositif 4 (un véhicule dans cet exemple).

Comme représenté sur la figure, on suppose que le terminal 2 et le véhicule 4 interagissent ensemble au cours d'un procédé d'authentification pour permettre au terminal 2 de s'authentifier auprès du véhicule 4. Le véhicule 4 envoie (E2) au terminal 2 une donnée de défi CH0 choisie aléatoirement. Le terminal 2 calcule (E4) alors une réponse RP0 à partir de la donnée de défi CH0 reçue. Pour ce faire, le terminal 2 dispose en mémoire d'un algorithme MAC à base d'AES, ou plus précisément d'une implémentation particulière en boîte blanche - notée wb[aes/ K_{EC}] - de cet algorithme. Cette implémentation en boîte blanche embarque notamment une clé cryptographique K_{EC} qui est masquée dans le code de l'implémentation. Le terminal 2 exécute (E4) ainsi l'algorithme MAC à base d'AES implémenté en boîte blanche à partir de la donnée de défi CH0 fournie par le véhicule 4 (ce qui se traduit par RP0 = wb[aes/K_{EC}](CH0)). Une fois déterminée, le terminal 2 envoie (E6) la réponse RP0 au véhicule 4 qui peut vérifier la validité de la réponse RP0 reçue. Pour ce faire, le véhicule calcule (E8) sa propre réponse théorique RP0a en exécutant l'algorithme MAC à base d'AES à partir de la donnée de défi CH0 et de la clé K_{EC} dont il dispose. Le véhicule compare (E10) ensuite la réponse RP0 reçue avec sa réponse théorique RP0a et authentifie avec succès le terminal 2 s'il y a correspondance entre RP0 et RP0a.

Dans l'exemple représenté en **figure 1****,** la technique d'implémentation en boîte blanche est appliquée directement à l'algorithme MAC à base d'AES qui est utilisé par le véhicule 4 pour authentifier le terminal 2, ce qui pose problème. Comme déjà indiqué, il n'existe qu'un nombre limité d'implémentations en boîte blanche possibles pour un même algorithme cryptographique, à savoir pour l'algorithme MAC à base d' AES dans cet exemple. Si un attaquant parvient à déterminer la clé cryptographique K_{EC} ou si la sécurité de l'implémentation de l'algorithme MAC à base d'AES est compromise de quelques manières que ce soient dans le terminal 2, il peut s'avérer difficile de mettre en œuvre une nouvelle implémentation en boîte blanche de ce même algorithme MAC à base d'AES dans le terminal 2, tout en maintenant un bon niveau de sécurité. Le programmeur jouit d'une liberté limitée du fait que la configuration du véhicule 4 impose dans cet exemple l'usage de l'algorithme MAC à base d'AES dans le véhicule 4 et donc aussi dans le terminal 2, et du fait que la technique d'implémentation en boîte blanche est appliquée dans cet exemple à cet algorithme MAC à base d'AES au sein du terminal 2. En outre, s'il est possible de modifier l'algorithme utilisé par le véhicule 4 pour authentifier le terminal 2, cela n'est généralement pas souhaitable dans la mesure où cela nécessiterait de modifier en profondeur la configuration de dispositifs déjà déployés sur le terrain.

La présente invention propose de changer de principe en appliquant cette fois la technique d'implémentation en boîte blanche, non plus à l'algorithme imposé par le deuxième dispositif pour authentifier le premier dispositif, mais à un autre algorithme de déchiffrement qui est utilisé par le premier dispositif pour sécuriser le processus d'authentification mais qui n'est pas celui utilisé par le deuxième dispositif au cours du procédé d'authentification. Il est ainsi possible d'adapter et de sécuriser l'implémentation en boîte blanche de cet autre algorithme de déchiffrement dans le premier dispositif, sans que cela n'ait d'impact pour le deuxième dispositif, en particulier sans qu'il soit nécessaire de modifier en profondeur la configuration du deuxième dispositif, et ce tout en maintenant un bon niveau de sécurité. Toute adaptation de l'implémentation en boîte blanche côté premier dispositif est alors sans conséquence pour le deuxième dispositif, ce qui offre davantage de flexibilité pour mieux sécuriser le procédé d'authentification contre des attaques.

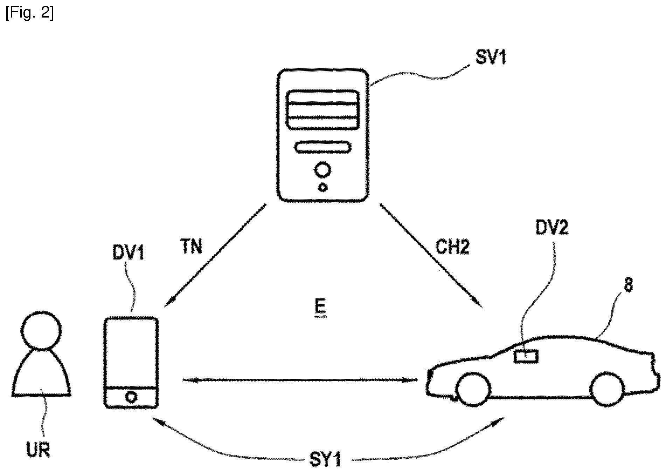

Des modes de réalisations particuliers sont à présent décrits en références aux **figures 2-8****.** Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

La **figure 2** représente un environnement E dans lequel un premier dispositif DV1 coopère avec un deuxième dispositif DV2. Le premier dispositif DV1 et le deuxième dispositif DV2 forment ensemble un système SY1.

Dans cet exemple, le premier dispositif DV1 est un terminal, tel qu'un téléphone portable (smartphone) ou une tablette par exemple. Le deuxième dispositif DV2 est un appareil inclus dans, ou couplé avec, un véhicule 8. En variante, le dispositif DV2 peut être le véhicule 8 lui-même.

Dans cet exemple, un utilisateur UR utilise le terminal DV1 pour s'authentifier auprès du véhicule 8, et plus particulièrement auprès du deuxième dispositif DV2 qui contrôle l'accès du véhicule 8.

L'environnement E peut éventuellement comprendre également un serveur distant SV1 capable de communiquer avec au moins le premier dispositif DV1 et le deuxième dispositif DV2 (ou au moins l'un parmi ceux-ci). Le serveur SV1 peut par exemple transmettre des données sous formes de jetons numériques TN (appelés aussi groupes de données, ou « token » en anglais) au premier dispositif DV1, ou encore transmettre des données de défi CH2 au deuxième dispositif DV2. Des implémentations de l'invention sont toutefois possibles sans un tel serveur SV1.

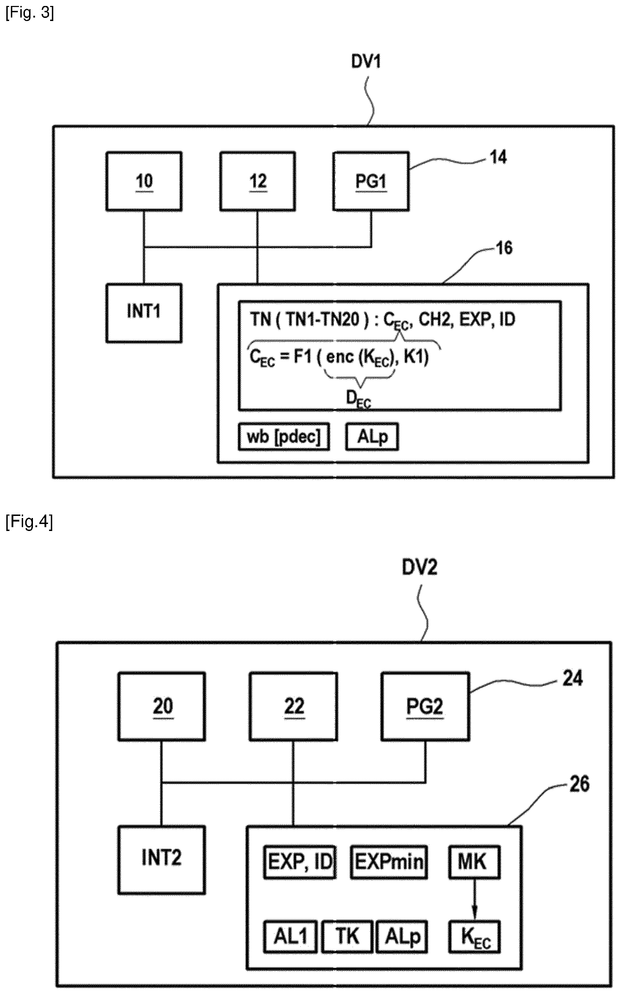

La **figure 3** représente la structure du premier dispositif DV1 illustré en **figure 2****,** selon un mode de réalisation particulier. Le premier dispositif DV1 comprend dans cet exemple un processeur 10, une mémoire volatile 12, une mémoire non volatile 14, une mémoire non volatile 16 et une interface de communication INT1.

La mémoire 14 est une mémoire non volatile réinscriptible ou une mémoire morte (ROM), cette mémoire constituant un support d'enregistrement (ou support d'informations) conforme à un mode de réalisation particulier, lisible par le premier dispositif DV1, et sur lequel est enregistré un programme d'ordinateur PG1 conforme à un mode de réalisation particulier. Ce programme d'ordinateur PG1 comporte des instructions pour l'exécution des étapes d'un procédé de traitement selon un mode de réalisation particulier, comme décrit ultérieurement.

La mémoire 16 est une mémoire non volatile réinscriptible apte à stocker des jetons numériques (tokens) TN, une implémentation en boîte blanche - notée wb[pdec] - d'un algorithme de déchiffrement pdec, ainsi qu'un algorithme cryptographique prédéterminé ALp. Le contenu de la mémoire 16 peut toutefois varier selon la mise en œuvre considérée de l'invention. Dans cet exemple, la mémoire 16 stocke un ensemble de jetons numériques TN notés de TN1 à TN20, chacun d'eux comprenant : des données de clé C_{EC}, une donnée de défi CH2, ainsi que des données EXP et ID. Comme décrit par la suite, le contenu des jetons TN et le nombre de jetons TN peuvent varier selon le cas. A titre d'exemple, des implémentations sont notamment possibles sans de tels jetons TN, ou encore sans les données EXP et ID dans ce jetons TN.

Comme décrit par la suite, les données de clé C_{EC} comprennent une clé cryptographique chiffrée D_{EC} qui résulte d'un chiffrement par exécution d'un l'algorithme de chiffrement penc. Comme cela apparaîtra plus clairement par la suite, cet algorithme de chiffrement penc est le pendant de l'algorithme de déchiffrement pdec, et inversement (autrement dit, ces deux algorithmes concordent l'un avec l'autre), de sorte que l'algorithme de déchiffrement pdec permet d'annuler, ou de déchiffrer, un chiffrement réalisé par l'algorithme de chiffrement penc.

La clé cryptographique chiffrée D_{EC} équivaut donc à la clé cryptographique K_{EC} sous forme chiffrée (D_{EC} = enc(K_{EC})). L'algorithme de déchiffrement pdec implémenté en boîte blanche peut être un quelconque algorithme de déchiffrement (un algorithme propriétaire, ou tout ou partie de l'algorithme AES, etc.). Comme décrit par la suite, un aspect de l'invention repose sur le fait que la technique d'implémentation en boîte banche est appliquée sur cet algorithme de déchiffrement pdec dans cet exemple.

Les données de clé C_{EC} (et donc la clé cryptographique chiffrée D_{EC} contenue dans C_{EC}) sont en outre masquées par exécution d'une fonction cryptographique de masquage F1 à partir de la clé cryptographique chiffrée D_{EC} et d'une clé de masquage K1. En d'autres termes, les données de clé C_{EC} résultent de l'exécution de la fonction cryptographique de masquage F1 prenant en entrée la clé cryptographique chiffrée D_{EC} et de la clé de masquage K1. Ainsi, la clé cryptographique chiffrée D_{EC}, contenue dans les données de clé C_{EC}, est donc masquée par exécution de la fonction de masquage F1. Les données de clé C_{EC} équivalent donc à la clé cryptographique K_{EC} sous forme chiffrée (par pdec) puis masquée (par F1).

Comme indiqué par la suite, ce n'est pas le premier dispositif DV1 qui réalise le masquage au moyen de la fonction F1 pour générer les données de clé C_{EC}. Le premier dispositif DV1 est en revanche apte à obtenir ou recevoir les données de clé C_{EC} et à les stocker dans la mémoire 16.

La nature et l'utilisation des différents éléments contenus dans la mémoire 16 seront décrites plus en détail ultérieurement.

L'interface de communication INT1 permet au premier dispositif DV1 de communiquer avec le deuxième dispositif DV2, via une liaison de communication appropriée, de type filaire ou sans fil (par exemple via une communication Bluetooth, Wifi, NFC ou de type radiocommunication par exemple tel que GSM ou LTE).

Le processeur 10 utilise par ailleurs la mémoire volatile 12 pour réaliser les différentes opérations ou fonctions nécessaires au fonctionnement du premier dispositif DV1, y compris pour exécuter le programme d'ordinateur PG1 lors de la mise en œuvre du procédé de traitement de l'invention.

La **figure 4** représente la structure du deuxième dispositif DV2 illustré en **figure 2****,** selon un mode de réalisation particulier. Le deuxième dispositif DV2 comprend dans cet exemple un processeur 20, une mémoire volatile 22, une mémoire non volatile 24, une mémoire non volatile 26 et une interface de communication INT2.

La mémoire 24 est une mémoire non volatile réinscriptible ou une mémoire morte (ROM), cette mémoire constituant un support d'enregistrement (ou support d'informations) conforme à un mode de réalisation particulier, lisible par le deuxième dispositif DV2, et sur lequel est enregistré un programme d'ordinateur PG2 conforme à un mode de réalisation particulier. Ce programme d'ordinateur PG2 comporte des instructions pour l'exécution des étapes d'un procédé de traitement selon un mode de réalisation particulier, comme décrit ultérieurement.

La mémoire 26 est une mémoire non volatile réinscriptible apte à stocker l'algorithme cryptographique prédéterminé ALp mentionné ci-avant, un algorithme de chiffrement AL1, une clé maîtresse MK à partir de laquelle une ou des clés K_{EC} peuvent être dérivées, une clé TK et des données EPX et ID. Le contenu de la mémoire 26 peut toutefois varier selon la mise en œuvre considérée de l'invention. A titre d'exemple, des implémentations sont notamment possibles sans au moins l'un (voire aucun) parmi EXP, ID, TK et MK.

Comme représenté en **figure 4****,** la mémoire 26 peut aussi être apte à stocker une donnée temporelle EXPmin (appelée ci-après deuxième donnée temporelle), bien que des mises en œuvre de l'invention soit possibles dans cette donnée temporelle.

La nature et l'utilisation des différents éléments contenus dans la mémoire 26 seront décrites plus en détail ultérieurement dans des exemples particuliers.

Dans l'exemple considéré ici, l'algorithme cryptographique prédéterminé ALp est donc utilisé par les premier et deuxième dispositifs DV1, DV2 lors d'un procédé d'authentification pour authentifier le premier dispositif DV1 auprès du deuxième dispositif DV2. Cet algorithme cryptographique ALp peut être un quelconque algorithme permettant de réaliser un chiffrement (ou plus généralement une opération cryptographique), dans la mesure bien entendu où les premier et deuxième dispositifs DV1, DV2 utilisent le même algorithme cryptographique ALp. Cet algorithme cryptographique ALp peut par exemple être un algorithme AES de chiffrement, ou un algorithme de calcul de signature, ou encore un algorithme de calcul d'identifiant MAC (pour « Message Authentication Code » en anglais), par exemple à base d'AES. Dans la mesure où l'on ne souhaite pas modifier en profondeur la configuration du deuxième dispositif DV2, la nature de l'algorithme cryptographique ALp mis en œuvre dans le premier dispositif DV1 est donc imposée par la configuration du deuxième dispositif DV2.

Par ailleurs, l'interface de communication INT2 est configurée pour coopérer avec l'interface de communication INT1 du premier dispositif DV1 (et inversement) afin d'établir une liaison de communication entre DV1 et DV2. Comme déjà indiqué, cette liaison peut être de diverses natures (filaire ou non filaire).

Le processeur 20 utilise en outre la mémoire volatile 22 pour réaliser les différentes opérations ou fonctions nécessaires au fonctionnement du deuxième dispositif DV2, y compris pour exécuter le programme d'ordinateur PG2 lors de la mise en œuvre du procédé de traitement de l'invention.

A noter que les premier et deuxième dispositifs DV1, DV2 représentés en **figures 2-4** ne constituent que des exemples de réalisation, d'autres mises en œuvre étant possibles dans le cadre de l'invention. Comme le comprend l'homme du métier, certains éléments des premier et deuxième dispositifs DV1, DV2 ne sont décrits ici que pour faciliter la compréhension de l'invention, ces éléments n'étant pas nécessaires pour mettre en œuvre l'invention.

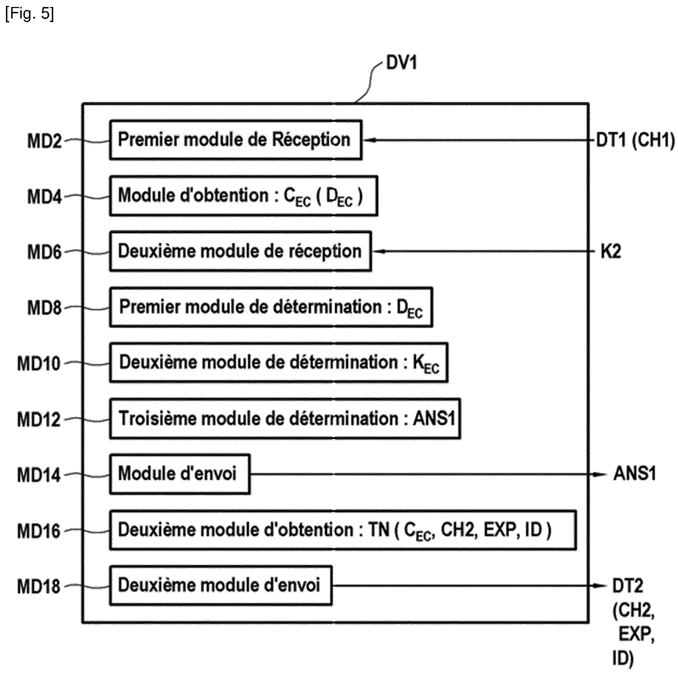

Comme représenté en **figure 5** selon un mode de réalisation particulier, le processeur 10 du premier dispositif DV1, piloté par le programme d'ordinateur PG1, met ici en œuvre un certain nombre de modules, à savoir : un premier module de réception MD2, un module d'obtention MD4, un deuxième module de réception MD6, un premier module de détermination MD8, un deuxième module de détermination MD10, un troisième module de détermination MD12 et un module d'envoi MD14, ainsi qu'éventuellement un deuxième module d'obtention MD16 et/ou un deuxième module d'envoi MD18. Des mises en œuvre de l'invention sont toutefois possibles notamment sans ces modules MD16 et MD18.

Plus précisément, le premier module de réception MD2 est configuré pour recevoir, en provenance du deuxième dispositif DV2, des premières données DT1 comprenant une première donnée de défi CH1.

Le module d'obtention MD4 est configuré pour obtenir des données de clé C_{EC} comme déjà décrites ci-avant en référence notamment à la **figure** 3. Ainsi, les données de clé C_{EC} comprennent une clé cryptographique chiffrée notée D_{EC} (qui a été préalablement chiffrée par un algorithme cryptographique penc), les données de clé C_{EC} étant elles-mêmes masquées par l'exécution préalable d'une fonction cryptographique de masquage F1 à partir de la clé cryptographique chiffrée D_{EC} et d'une clé de masquage K1.

Ainsi, comme déjà indiqué, la clé cryptographique chiffrée D_{EC} est une version chiffrée de la clé cryptographique K_{EC}, cette version étant obtenue par le chiffrement de la clé cryptographique K_{EC} au moyen d'un algorithme cryptographique penc. En outre, la clé cryptographique chiffrée D_{EC}, contenue dans les données de clé C_{EC}, est elle-même masquée par exécution de la fonction de masquage F1.

La manière dont le module d'obtention MD4 récupère les données de clé C_{EC} peut varier selon le cas, comme décrit ultérieurement. Les données de clés C_{EC} peuvent par exemple être reçues au préalable depuis l'extérieur, par exemple depuis le serveur SV1 **(****figure 2****).** Le serveur SV1 peut par exemple être configuré pour générer ces données de clés C_{EC}.

Le deuxième module de réception MD6 est configuré pour recevoir, en provenance du deuxième dispositif DV2, une clé de démasquage K2. Cette clé de démasquage K2 est configurée pour pouvoir être utilisée en entrée d'une fonction cryptographique de démasquage F2 comme indiqué ci-dessous.

Le premier module de détermination MD8 est configuré pour déterminer la clé cryptographique chiffrée D_{EC} (c.-à-d. la version chiffrée, mais non masquée, de la clé K_{EC}) en exécutant une fonction cryptographique de démasquage F2 à partir des données de clé C_{EC} obtenues par le module d'obtention MD4 et à partir de la clé de démasquage K2 reçue par le deuxième module de réception MD6. La fonction de démasquage F2 est configurée de sorte à annuler le masquage réalisé préalablement par la fonction F1 pour générer les données de clé C_{EC}. Autrement dit, le premier module de détermination MD8 réalise un démasquage des données de clé C_{EC} en utilisation la fonction de démasquage F2 qui est une fonction cryptographique inverse de la fonction de masquage F1 utilisée pour générer les données de clé C_{EC}. Comme indiqué par la suite, diverses fonctions cryptographiques F1 et F2 sont envisageables dans la mesure où elles sont l'inverse l'une de l'autre.

Le deuxième module de détermination MD10 est configuré pour déterminer la clé cryptographique déchiffrée K_{EC} par un déchiffrement en exécutant l'algorithme de déchiffrement pdec implémenté en boîte blanche (c.-à-d. l'implémentation en boîte blanche wb[pdec]) à partir de la clé cryptographique chiffrée D_{EC} déterminée par le premier module de détermination MD8.

Le troisième module de détermination MD12 est configuré pour déterminer une donnée de réponse ANS1 par une opération cryptographique en exécutant un algorithme cryptographique prédéterminé ALp tel que mentionné ci-avant à partir de la clé cryptographique déchiffrée K_{EC} déterminée par le deuxième module de détermination MD10 et de la première donnée de défi CH1 reçue par le premier module de réception MD2. Comme décrit ci-après dans des exemples particuliers, cette opération cryptographique peut être un chiffrement ou d'autres types d'opérations cryptographiques (calcul de signature, calcul de MAC, etc.).

Le module d'envoi MD14 est configuré pour envoyer au deuxième dispositif DV2, en réponse aux premières données DT1 reçues par le premier module de réception MD2, la donnée de réponse ANS1 déterminée par le troisième module de détermination MD12, de sorte à authentifier le premier dispositif DV1 auprès du deuxième dispositif DV2.

Comme déjà indiqué, le premier dispositif DV1 peut le cas échéant comprendre également un deuxième module d'obtention MD16 configuré pour obtenir au moins un jeton numérique TN comprenant les données de clé C_{EC}. Le module d'obtention MD4 est alors configuré pour extraire les données de clé C_{EC} depuis le jeton numérique TN. Selon des modes de réalisation particuliers, le jeton numérique TN peut comprendre diverses autres données, telles qu'une donnée de défi CH2 ou encore des données EXP et ID, dont la nature et l'utilisation seront décrits ultérieurement.

Comme déjà indiqué, le premier dispositif DV1 peut le cas échéant comprendre également un deuxième module d'envoi MD18 configuré pour envoyer au deuxième dispositif DV2 des deuxièmes données DT2 comprenant une deuxième donnée de défi CH2 (celle-ci étant par exemple extraite depuis un jeton numérique TN obtenu le cas échéant par le deuxième module d'obtention MD16).

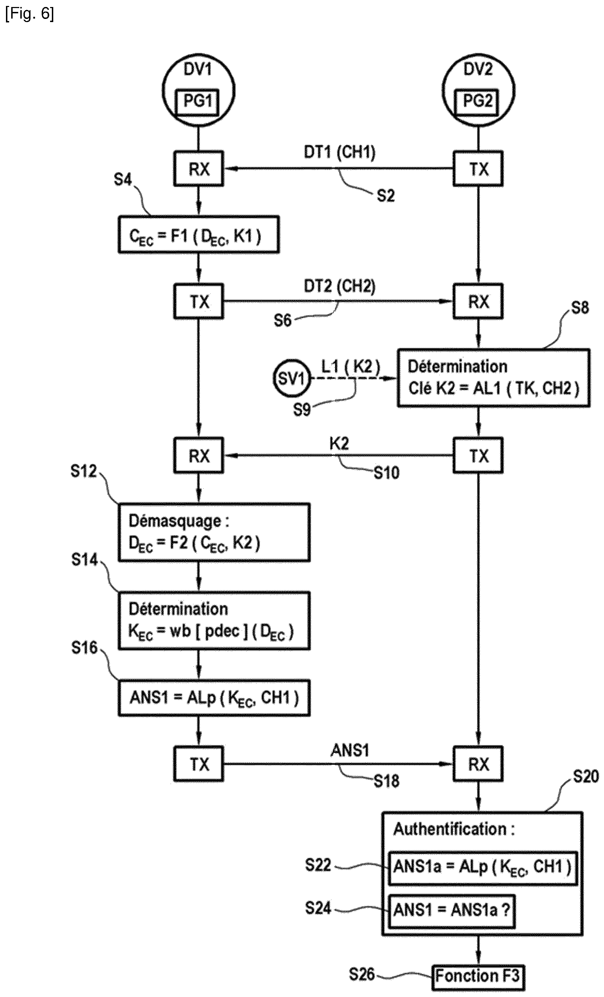

La configuration et le fonctionnement des modules MD2-MD18 du premier dispositif DV1 apparaîtront plus précisément dans les exemples de réalisation décrits ci-après en référence aux **figures 6-8****.** A noter que les modules MD2-MD18 tels que représentés en **figure 5** ne représentent qu'un exemple de mise en œuvre non limitatif de l'invention.

De manière générale, pour chaque étape du procédé de traitement de l'invention, le premier dispositif de l'invention peut comprendre un module correspondant configuré pour réaliser ladite étape.

Un mode de réalisation particulier est à présent décrit en référence à la **figure 6****.** Plus précisément, le premier dispositif DV1 (nommé ci-après « terminal ») et le deuxième dispositif DV2 précédemment décrits en référence aux **figures 2-5** coopèrent ensemble pour permettre notamment au premier dispositif DV1 de s'authentifier auprès du deuxième dispositif DV2. Pour ce faire, le terminal DV1 met en œuvre un procédé de traitement (ou procédé d'authentification), en coopération le deuxième dispositif DV2, en exécutant le programme d'ordinateur PG1. De même, le deuxième dispositif DV2 exécute le programme d'ordinateur PG2 pour authentifier le terminal DV1.

Au cours d'une étape S2 de réception, le terminal DV1 reçoit en provenance du deuxième dispositif DV2 des premières données DT1 comprenant une première donnée de défi (ou « challenge data » en anglais) notée CH1. Le deuxième dispositif DV2 choisit par exemple de façon aléatoire la donnée de défi CH1 envoyée en S2 au terminal DV1 afin de sécuriser le procédé.

Par ailleurs, le terminal DV1 obtient (S4) des données de clé C_{EC} comprenant une clé cryptographique chiffrée D_{EC}, lesdites données de clé C_{EC} (et donc la clé chiffrée D_{EC} contenue dans les données de clé C_{EC}) étant masquées par exécution d'une fonction cryptographique de masquage F1 à partir de la clé cryptographique chiffrée D_{EC} et d'une clé de masquage K1.

Plus particulièrement, la clé cryptographique chiffrée D_{EC} résulte d'un chiffrement par un algorithme cryptographique penc. Autrement dit, la clé cryptographique chiffrée D_{EC} est une version chiffrée de la clé cryptographique K_{EC}, cette version étant obtenue par le chiffrement de la clé cryptographique K_{EC} au moyen de l'algorithme cryptographique penc.

En outre, la clé cryptographique chiffrée D_{EC}, contenue dans les données de clé C_{EC}, est elle-même masquée par exécution de la fonction cryptographique de masquage F1. Les données de clé C_{EC} équivalent donc à la clé cryptographique K_{EC} sous forme chiffrée (par pdec) puis masquée (par F1).

La manière dont le terminal DV1 récupère les données de clé C_{EC} peut varier selon le cas, comme décrit ultérieurement. Les données de clés C_{EC} peuvent par exemple être reçues au préalable depuis l'extérieur, par exemple depuis le serveur SV1 **(****figure 2****).** Selon un exemple particulier, c'est le serveur SV1 qui génère les données de clé C_{EC}, en chiffrant la clé cryptographique K_{EC} pour obtenir la clé cryptographique chiffrée D_{EC} en exécutant l'algorithme de chiffrement penc, puis en masquant la clé cryptographique chiffrée D_{EC} ainsi obtenue en exécutant la fonction cryptographique de masquage F1 à partir d'une clé de masquage K1.

Le terminal DV1 peut préalablement enregistrer dans sa mémoire 16 **(****figure 3****)** les données de clé C_{EC} reçues et consulter sa mémoire 16 pour récupérer ces données lors de l'étape S4 d'obtention.

Au cours d'une étape S6 d'envoi, le terminal DV1 envoie alors au deuxième dispositif DV2 des deuxièmes données DT2 comprenant une deuxième donnée de défi (ou « challenge data » en anglais) notée CH2. La manière dont le terminal DV1 détermine au préalable la deuxième donnée de défi CH2 à envoyer au deuxième dispositif DV2 peut varier selon le cas. Le terminal DV1 peut par exemple recevoir et enregistrer au préalable, dans sa mémoire 16, la deuxième donnée de défi CH2 en association avec les données de clé C_{EC}. Comme indiqué ci-après, des implémentations sont possible dans lesquelles le terminal DV1 n'envoie pas de deuxièmes données DT2 au deuxième dispositif DV2.

Dans cet exemple, le deuxième dispositif DV2 détermine (S8) ensuite, à partir de la deuxième donnée de défi CH2 reçue en S6, une clé de démasquage K2. Plus précisément, le deuxième dispositif DV2 calcule cette clé de démasquage K2 en exécutant un algorithme de chiffrement AL1 à partir de la deuxième donnée de défi CH2 et éventuellement aussi à partir d'une clé TK stockée dans la mémoire 26 du deuxième dispositif DV2 (bien que le recours à cette clé TK ne soit pas obligatoire). Autrement dit, l'algorithme de chiffrement AL1 prend en entrée la deuxième donnée de défi CH2, et éventuellement aussi la clé TK, pour produire en sortie la clé de démasquage K2. Cette clé de démasquage K2 constitue une réponse visant à permettre au terminal DV1 de démasquer la clé cryptographique chiffrée D_{EC} contenue sous forme masquée dans les données de clé C_{EC}.

A noter que l'algorithme de chiffrement AL1 utilisé en S8 par le deuxième dispositif DV2 pour générer la clé de démasquage K2 peut être quelconque dans la mesure où il permet de produire la clé de démasquage K2 requise pour que le terminal DV1 puisse ensuite réaliser le démasquage en S12 comme décrit ci-après. En particulier, l'algorithme de chiffrement AL1 peut être différent de l'algorithme cryptographique prédéterminé ALp utilisé par le terminal DV1 et le deuxième dispositif DV2 pour authentifier le terminal DV1. L'algorithme de chiffrement AL1 peut être l'algorithme AES ou tout autre algorithme de chiffrement approprié.

Au cours d'une étape S10 d'envoi, le deuxième dispositif DV2 envoie ainsi au terminal DV1, en réponse aux deuxièmes données DT2 reçues en S6, la clé de démasquage K2. L'envoi en S6 de la deuxième donnée de défi CH2 depuis le terminal DV1 au deuxième dispositif DV2 permet de sécuriser encore davantage le procédé de traitement dans la mesure où la clé de démasquage K2 ne peut être générée par le deuxième dispositif DV2 qu'à partir de la donnée de défi CH2 fournie au préalable par le terminal DV1 lors d'une interaction. Toutefois, d'autres implémentations sont possibles dans lesquelles le deuxième dispositif DV2 n'a pas besoin d'une telle deuxième donnée de défi CH2 du terminal DV1 pour générer ou obtenir la clé de démasquage K2.

En variante, le terminal DV1 n'envoie pas les deuxièmes données DT2 au cours de l'étape S6 d'envoi, et le deuxième dispositif DV2 détermine en S8 la clé de démasquage K2 selon une quelconque manière appropriée (cette clé K2 peut notamment être reçue de l'extérieur). Le deuxième dispositif DV2 envoie alors en S10 la clé de démasquage K2 au terminal DV1 sans répondre à une quelconque donnée de défi CH2 du terminal DV1.

Selon un exemple particulier, le deuxième dispositif DV2 reçoit la clé de démasquage K2 depuis le serveur SV1. Pour ce faire, le deuxième dispositif DV2 reçoit par exemple, en provenance du serveur SV1, une liste d'une ou d'une pluralité de clés de démasquage K2. Le deuxième dispositif DV2 extrait alors la clé de démasquage K2 de cette liste, par exemple selon un ordre prédéterminé, et l'envoie en S10 au terminal DV1.

Selon un autre exemple, DV2 peut recevoir les données de défi CH2 ou les clés de démasquage K2, depuis un serveur SV1, en association avec les clés K_{EC}.

Le terminal DV1 reçoit (S10) ainsi, en réponse aux deuxièmes données DT2, la clé de démasquage K2 fournie par le deuxième dispositif DV2. Au cours d'une étape S12 de détermination, le terminal DV1 détermine ensuite la clé cryptographique chiffrée D_{EC} en exécutant une fonction cryptographique de démasquage F2 (comme mentionnée ci-avant) à partir des données de clé C_{EC} obtenues en S4 et de la clé de démasquage K2 reçue en S10. Autrement dit, la fonction de démasquage F2 est exécutée en prenant en entrée les données de clé C_{EC} et la clé de démasquage K2 pour démasquer les données de clé C_{EC} et ainsi obtenir en sortie la clé cryptographique chiffrée D_{EC}.

La fonction de démasquage F2 peut être adaptée selon le cas et est choisie de sorte à annuler l'effet de masquage produit par la fonction cryptographique de masquage F1 pour produire les données de clé C_{EC}. Autrement dit, la fonction de démasquage F2 est choisie en fonction de la fonction de masquage F1 de sorte à produire l'effet cryptographique inverse de la fonction de masquage F1 (c'est-à-dire un effet de démasquage).

Selon un exemple particulier, les fonctions cryptographiques de masquage F1 et de démasquage F2 sont respectivement des fonctions associées de chiffrement et de déchiffrement. Diverses fonctions de chiffrement et de déchiffrement peuvent être envisagées. Selon un exemple particulier, les fonctions cryptographiques de masquage F1 et de démasquage F2 sont des fonctions de chiffrement symétriques, la clé de masquage K1 (à partir de laquelle sont générées les données de clé C_{EC}) et la clé de démasquage K2 étant identiques. En variante, les fonctions cryptographiques de masquage F1 et de démasquage F2 sont des fonctions de chiffrement et de déchiffrement de type asymétrique, où les clés K1 et K2 sont respectivement des clés publique et privée différentes.

Selon un exemple particulier, les fonctions cryptographiques de masquage F1 et de démasquage F2 sont des fonctions « OU exclusif » dite XOR (ou disjonction exclusive). La fonction XOR, bien connue de l'homme du métier, est traditionnellement représentée par le symbole « ⊕ ». Dans ce cas particulier, les fonctions F1 et F2 sont donc identiques et s'annulent dans la mesure où l'effet de masquage produit par l'application de F1 est annulé par l'application de F2 en S12.

Le masquage initial des données de clé D_{EC} offre une protection avantageuse de la clé cryptographique K_{EC} dans la mesure où, pour pouvoir extraire la clé cryptographique chiffrée D_{EC} (et ainsi en déduire la clé cryptographique K_{EC}), le terminal DV1 doit au préalable interagir avec le deuxième dispositif DV2 de sorte à récupérer la clé de démasquage K2. C'est seulement en utilisant cette clé de démasquage K2 que le terminal DV1 peut, par exécution de la fonction cryptographique de démasquage F2, déterminer la clé cryptographique chiffrée D_{EC}, c'est-à-dire la clé cryptographique K_{EC} sous une forme chiffrée. Sans la clé de démasquage fournie par le deuxième dispositif DV2, il n'est pas possible pour un attaquant de démasquer la clé cryptographique chiffrée D_{EC}.

Au cours d'une étape S14 de détermination, le terminal DV1 détermine alors la clé cryptographique K_{EC} sous sa forme déchiffrée (en clair). Pour ce faire, le terminal DV1 réalise un déchiffrement en exécutant un algorithme cryptographique pdec de déchiffrement implémenté en boîte blanche à partir de la clé cryptographique chiffrée D_{EC}. Autrement dit, le terminal DV1 exécute l'implémentation en boîte blanche wb[pdec] de l'algorithme de déchiffrement pdec en prenant en entrée la clé cryptographique chiffrée D_{EC} de sorte à produire en sortie la clé cryptographique K_{EC} en clair.

Ainsi, selon le principe de l'invention, la technique de l'implémentation en boîte blanche est appliquée, non pas à l'algorithme de chiffrement prédéterminée ALp imposé par le deuxième dispositif DV2 pour authentifier le terminal DV1, mais à l'algorithme de déchiffrement pdec qui est propre au terminal DV1 et qui peut donc être adapté par l'homme du métier avec davantage de liberté que l'algorithme ALp pour sécuriser au mieux le procédé.

L'algorithme de déchiffrement pdec peut être un quelconque algorithme de déchiffrement dans la mesure où il permet d'inverser (ou d'annuler) le chiffrement précédemment réalisé par l'algorithme de chiffrement penc pour générer la clé cryptographique chiffrée D_{EC}, de sorte à obtenir la clé cryptographique K_{EC}. Autrement dit, l'algorithme de chiffrement penc et l'algorithme de déchiffrement pdec sont des algorithmes cryptographiques associés configurées pour effectuer des fonctions cryptographiques inverses.

L'algorithme de déchiffrement pdec peut par exemple être un algorithme propriétaire, ou encore tout ou partie de l'algorithme AES, etc. Selon un exemple particulier, L'algorithme de chiffrement penc et l'algorithme de déchiffrement pdec sont différents de l'algorithme cryptographique prédéterminé ALp utilisé par le deuxième dispositif DV2 pour authentifier le terminal DV1. A noter que la différence peut porter sur l'implémentation d'un même type d'algorithme (pour un même principe mathématique). A titre d'exemple, les algorithmes ALp et pdec (ainsi que penc) peuvent être des algorithmes différents dans le sens où leurs implémentations logicielles respectives sont différentes, par exemple dans le cas où l'algorithme pdec est un algorithme AES implémenté en boîte blanche tandis que l'algorithme ALp est un algorithme AES implémenté sans boîte blanche.

Selon un exemple particulier, l'algorithme de déchiffrement pdec est un algorithme autre que l'algorithme AES.

A noter que, lors de l'étape S14, l'implémentation en boîte blanche wb[pdec] de l'algorithme de déchiffrement pdec peut éventuellement prendre en entrée, outre la clé cryptographique chiffrée D_{EC}, des données propres au terminal DV1 et/ou qui proviennent de l'utilisateur UR du terminal DV1 (par exemple code secret PIN entré par l'utilisateur UR).

L'implémentation en boîte blanche wb[pdec] de l'algorithme de déchiffrement pdec peut également prendre en compte une clé, celle-ci pouvant être enfoui dans l'implémentation de la boite blanche ou « tokenisée » (c'est-à-dire mise sous forme de jeton), et passée en paramètre de la boite blanche. Cette clé tokenisée peut par exemple être obtenue par le terminal DV1 dans les données de clé C_{EC} obtenues en S4.

Au cours d'une étape S16 de détermination, le terminal DV1 détermine ensuite une donnée de réponse ANS1 par un chiffrement (ou plus généralement par une opération cryptographique) en exécutant un algorithme cryptographique prédéterminé ALp (tel que mentionné ci-avant) à partir de la clé cryptographique déchiffrée K_{EC} déterminée en S14 et de la première donnée de défi CH1 précédemment reçue en S2. Autrement dit, le terminal DV1 exécute l'algorithme cryptographique prédéterminé ALp en prenant en entrée la clé cryptographique K_{EC} et la donnée de défi CH1 de sorte à produire en sortie la donnée de réponse ANS1, qui constitue une réponse à la donnée de défi CH1 reçue en S2.

Dans l'exemple considéré ici, l'algorithme cryptographique ALp n'est pas implémenté en boîte blanche (bien que cela soit possible). Comme décrit ci-avant, la technique d'implémentation en boîte blanche est appliquée sur l'algorithme de déchiffrement pdec en S14, ce qui permet d'améliorer la flexibilité et la sécurité du procédé de traitement.

Au cours d'une étape S18 d'envoi, le terminal DV1 envoi ensuite au deuxième dispositif DV2, en réponse aux premières données DT1 reçues en S2 (et en particulier en réponse à la donnée de défi CH1), la donnée de réponse ANS1 pour authentifier le terminal DV1 (et donc l'utilisateur UR) auprès du deuxième dispositif DV2.

Une fois la donnée de réponse ANS1 reçue (S18), le deuxième dispositif DV2 authentifie (S20) le terminal DV1 à partir de la donnée de réponse ANS1 et de la donnée de défi CH1. Plus précisément, le deuxième dispositif DV2 calcule (S22) une donnée de réponse théorique ANS1a par un chiffrement (ou plus généralement par une opération cryptographique) en exécutant l'algorithme cryptographique prédéterminé ALp à partir de la clé cryptographique K_{EC} et de la donnée de défi CH1 précédemment envoyée en S2. Autrement dit, le deuxième dispositif DV2 exécute l'algorithme cryptographique prédéterminé ALp en prenant en entrée la clé cryptographique K_{EC} et de la donnée de défi CH1 de sorte à produire en sortie la donnée de réponse théorique ANS1a. Le deuxième dispositif DV2 peut récupérer la clé cryptographique K_{EC} selon une quelconque manière appropriée.

Le deuxième dispositif DV2 compare (S24) ensuite la donnée de réponse ANS1 fournie par le terminal DV1 en S18 avec la donnée de réponse théorique ANS1a déterminée en S22. Si la donnée de réponse ANS1 reçue coïncide avec la donnée de réponse théorique ANS1a, le terminal DV1 est authentifié avec succès, sinon l'authentification échoue. Autrement dit, le terminal DV1 n'est authentifié ave succès que s'il y a correspondance entre ANS1 et ANS1a.

Comme déjà indiqué, l'algorithme cryptographique prédéterminé ALp utilisé par les premier et deuxième dispositifs DV1, DV2 lors d'un procédé d'authentification pour authentifier le premier dispositif DV1 peut varier selon le cas, dans la mesure toutefois où ce même algorithme cryptographique ALp est utilisé à la fois par le terminal DV1 et le deuxième dispositif DV2 (afin que la donnée de réponse ANS1 puisse être vérifiée par le deuxième dispositif DV2 en S20). Cet algorithme cryptographique ALp peut par exemple être un algorithme AES de chiffrement, ou un algorithme de calcul de signature, ou encore un algorithme de calcul d'identifiant MAC (pour « Message Authentication Code » en anglais), par exemple à base d'AES. Le principe de calcul d'une signature ou encore d'un MAC est connu de l'homme du métier et n'est donc pas décrit en détail ici par souci de simplicité.

Le deuxième dispositif DV2 peut en outre contrôler l'accès à une fonction F3 (ici une fonction quelconque du véhicule 8) en fonction du résultat de l'étape d'authentification S20. En particulier, si le terminal DV1 est authentifié avec succès, le deuxième dispositif DV2 peut déclencher la mise en œuvre de la fonction F3, tandis que la fonction F3 est bloquée si l'authentification échoue. Comme déjà indiqué, cette fonction F3 peut par exemple consister à contrôler l'accès au véhicule 8 ou à contrôler sa mise en marche.

Selon un exemple particulier, suite à l'étape S18 d'envoi **(****figure 6****),** le terminal DV1 est reconfiguré de sorte à modifier l'algorithme de déchiffrement pdec en le remplaçant par un nouvel algorithme de déchiffrement pdec différent de l'ancien. Le procédé d'authentification tel que décrit ci-avant dans les étapes S2-26 peut ensuite être réalisé à nouveau en utilisant en S14 le nouvel algorithme de déchiffrement pdec implémenté en boîte blanche dans le terminal DV1.

La présente invention permet avantageusement d'authentifier de façon sécurisée et flexible le premier dispositif DV1 auprès du deuxième dispositif. Dans l'exemple décrit ci-avant, le deuxième dispositif DV2 exécute l'algorithme cryptographique prédéterminé ALp pour authentifier le premier dispositif DV1. Dans la mesure où l'on souhaite modifier au minimum la configuration (l'application, le protocole,...) du deuxième dispositif DV2, c'est la configuration du deuxième dispositif DV2 qui impose au premier dispositif DV1 d'utiliser ce même algorithme cryptographique ALp lors du procédé d'authentification pour générer la donnée de réponse ANS1. L'utilisation du même algorithme ALp est en effet requise pour que le deuxième dispositif DV2 puisse vérifier en S20 **(****figure 6****)** la validité de la donnée de réponse ANS1 fournie par le premier dispositif DV1 en calculant une donnée de réponse théorique ANS1a comme décrit ci-avant.

Or, un principe de l'invention repose sur le fait que la technique d'implémentation en boîte blanche est appliquée lors de l'exécution (S14, **figure 6****)** par le premier dispositif DV1 de l'algorithme de déchiffrement pdec. Ainsi, c'est l'algorithme cryptographique pdec qui est implémenté en boîte blanche dans le premier dispositif DV1 et non l'algorithme cryptographique ALp (bien que cela soit possible). Dans la mesure où le choix des algorithmes ALp et pdec est décorrélé, on peut donc choisir judicieusement, et adapter au besoin, l'algorithme de déchiffrement pdec implémenté en boîte blanche (S14) dans le premier dispositif DV1, sans modifier l'algorithme cryptographique ALp exécutés (S16, S22) dans les premier et deuxième dispositifs DV1, DV2. Autrement dit, l'algorithme cryptographique ALp utilisé par le deuxième dispositif DV2 peut être quelconque dans la mesure où le même algorithme cryptographique ALp est également utilisé par le premier dispositif DV1 pour générer la donnée de réponse ANS1 (S16, **figure 6****).** En particulier, l'algorithme cryptographique ALp n'a pas besoin d'être sécurisé par une implémentation en boîte blanche dans le premier dispositif DV1. L'invention permet ainsi de gagner en flexibilité de configuration, notamment lorsqu'une attaque a compromis la sécurité du premier dispositif DV1 et qu'il est nécessaire de modifier l'implémentation en boîte blanche de l'algorithme de déchiffrement pdec dans le premier dispositif DV1.

Comme déjà indiqué, le nombre d'implémentations possibles en boîte blanche est limité pour un même algorithme. Aussi, en cas de problème de sécurité, il est possible dans l'invention de modifier l'algorithme de déchiffrement pdec de sorte qu'un nouvel algorithme pdec soit implémenté en boîte blanche par le premier dispositif DV1 lors de l'étape S14 **(****figure 6****)** de détermination de la clé cryptographique K_{EC}., ce qui permet de renforcer la sécurité du procédé d'authentification sans que cela n'ait d'impact sur la configuration du deuxième dispositif DV2. En d'autres termes, l'invention permet ainsi de renouveler plus facilement l'implémentation en boîte blanche de l'algorithme de déchiffrement pdec sans incidence vis-à-vis du deuxième dispositif DV2 qui n'exécute pas l'algorithme de déchiffrement pdec.

Un attaquant peut toujours tenter d'analyser l'algorithme de déchiffrement pdec implémenté en boîte blanche pour extraire la clé cryptographique K_{EC}, mais l'algorithme pdec peut être un algorithme propriétaire (ou éventuellement tout ou partie de l'algorithme AES) et peut être modifié régulièrement, ce qui rend toutes attaques difficiles. Selon un exemple particulier, l'algorithme de déchiffrement pdec est un algorithme autre que l'algorithme AES.

Un autre avantage de l'invention réside dans le fait qu'elle requiert que le premier dispositif DV1 interagisse avec le deuxième dispositif DV2 pour récupérer la clé de démasquage K2 lui permettant de démasquer ensuite la clé chiffrée D_{EC}, ce qui laisse un temps limité à un attaquant pour découvrir la clé déchiffrée K_{EC} et l'utiliser. Cette interaction préalable du premier dispositif DV1 avec le deuxième dispositif DV2 rend plus complexe les attaques car elle oblige l'attaquant à interagir au préalable avec le deuxième dispositif DV2 pour déterminer la clé cryptographique K_{EC}. Si la transaction ne se déroule pas correctement (par exemple, elle ne finit pas correctement ou prend trop de temps), le deuxième dispositif DV2 peut notamment bloquer la clé cryptographique K_{EC} de sorte à ce qu'elle soit considérée invalide, empêchant ainsi toute authentification ultérieure à partir de cette clé.

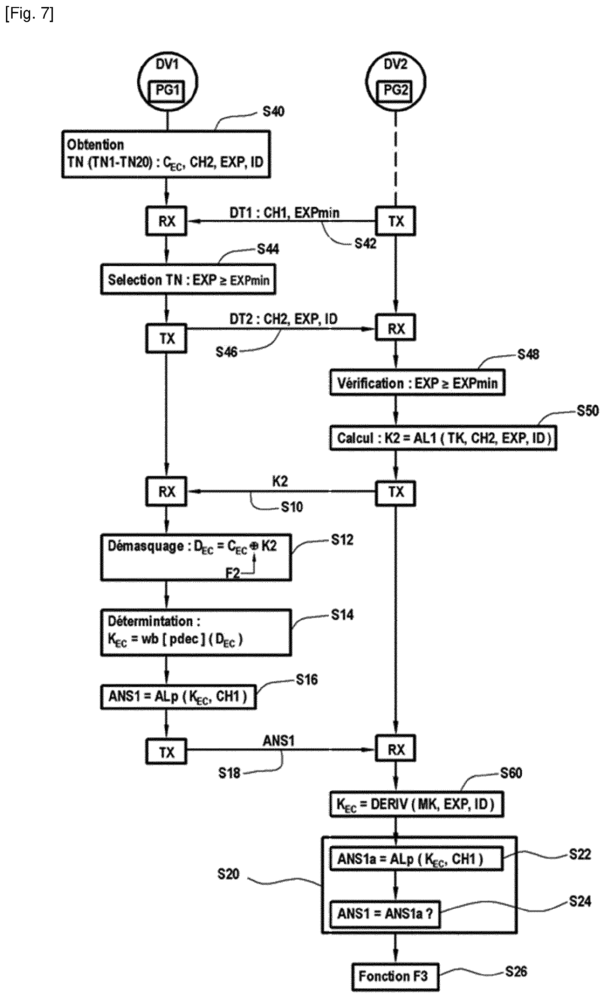

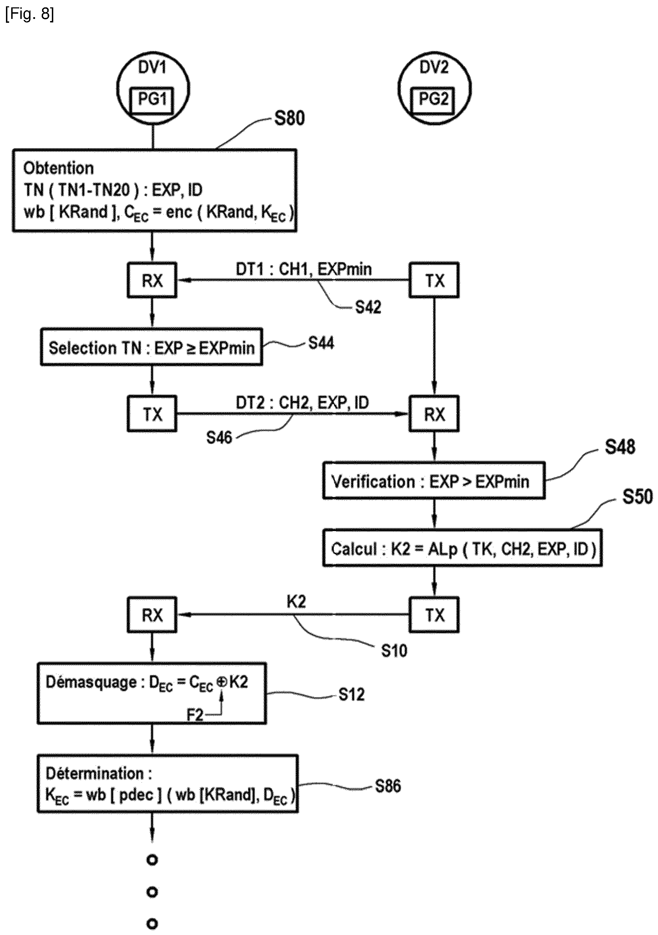

Des variantes d'implémentation du mode de réalisation de la **figure 6** sont à présent décrites ci-après en référence aux **figures 7** et **8****.** Sauf indications contraires, la description faite ci-avant des différentes caractéristiques et étapes de l'invention selon les modes de réalisation décrits ci-avant s'appliquent de la même manière aux caractéristiques correspondantes présentant le même signe de référence dans les variantes des **figures 7** et 8.

Selon le mode de réalisation représenté en **figure 7****,** on suppose à nouveau que le premier dispositif DV1 (nommé ci-après « terminal ») et le deuxième dispositif DV2 précédemment décrits en référence aux **figures 2-5** coopèrent ensemble pour permettre notamment au premier dispositif DV1 de s'authentifier auprès du deuxième dispositif DV2. Pour ce faire, le terminal DV1 met en œuvre un procédé de traitement (ou procédé d'authentification), en coopération le deuxième dispositif DV2, en exécutant le programme d'ordinateur PG1. De même, le deuxième dispositif DV2 exécute le programme d'ordinateur PG2 pour authentifier le terminal DV1.

On suppose dans cet exemple que le terminal DV1 reçoit (ou obtient), au cours d'une étape S40 de réception (ou d'obtention), une pluralité de jetons numériques TN, chacun d'eux comprenant des données de clé C_{EC} en association avec une donnée de défi CH2, une première donnée temporelle EXP et un identifiant ID de clé. Pour chaque jeton numérique TN, la première donnée temporelle EXP indique une période de temps de validité au cours de laquelle la clé cryptographique associée est valide. De plus, l'identifiant ID identifie la clé cryptographique K_{EC} associée du jeton numérique TN considéré, cette clé K_{EC} étant utilisable pendant la période de validité spécifiée par la première donnée temporelle EXP.

La première donnée temporelle EXP peut par exemple indiquer un instant d'expiration ou un instant de fin de validité (par exemple une date d'expiration et/ou une heure d'expiration), au-delà duquel la clé cryptographique K_{EC} associée n'est plus valide.

L'identifiant ID peut être un indice ou prendre une quelconque autre forme appropriée. Cet identifiant ID permet de différencier plusieurs clés cryptographiques K_{EC} (et plus généralement plusieurs jetons numérique TN), y compris lorsque la même période de validité (et donc la même valeur de la donnée EXP) est assignée à plusieurs clés cryptographiques K_{EC}. Les valeurs des données EXP et ID peuvent être choisies de sorte à ce que chaque jeton numérique TN (et donc chaque clé cryptographique K_{EC}) soit associé à un couple (EXP, ID) unique.

Comme déjà indiqué, d'autres implémentations sont également possibles sans le recours aux données EXP et ID. Toutefois, l'usage des données EXP et ID est avantageux en ce qu'il permet notamment de limiter le temps de validité des clés cryptographiques K_{EC} et donc de limiter le temps pendant lequel un attaquant peut compromettre la sécurité du système et utiliser des clés acquises illicitement.

Dans l'exemple considéré ici, le terminal DV1 contient des jetons numériques TN, notés de TN1 à TN20, dans sa mémoire 16 **(****figure 3****).** A noter toutefois que le nombre de jetons numériques obtenus par le terminal DV1 peut varier selon le cas. Le terminal DV1 peut être apte à obtenir un ou une pluralité de jetons numériques TN comme décrits ci-avant.

Au cours d'une étape S42 de réception, le terminal DV1 reçoit en provenance du deuxième dispositif DV2 des premières données DT1 comprenant, une première donnée de défi CH1 (comme déjà décrit ci-avant) ainsi qu'une deuxième donnée temporelle EXPmin. Autrement dit, l'étape S42 de réception diffère de l'étape S2 **(****figure 6****)** décrite précédemment en ce que les premières données DT1 reçues comprennent, en plus de la première donnée de défi CH1, une deuxième donnée temporelle EXPmin. La deuxième donnée temporelle EXPmin permet au terminal DV1 de réaliser une sélection d'un jeton numérique TN comme décrit ci-après dans l'étape S44.

Au cours d'une étape S44 de sélection, le terminal DV1 sélectionne, à partir de la deuxième donnée temporelle EXPmin reçues en S42 dans les premières données DT1, un jeton numérique TN parmi un ou des jetons numériques TN accessibles par le terminal DV1, c'est-à-dire parmi les jetons numérique TN1-TN20 enregistrés dans sa mémoire 16 dans l'exemple considéré ici.

La deuxième donnée temporelle EXPmin est indicative d'une période de validité dans laquelle la clé cryptographique K_{EC}, du jeton numérique TN sélectionné en S44, doit être valide. Autrement dit, le terminal DV1 sélectionne un jeton numérique TN (et donc une clé cryptographique K_{EC} correspondante), parmi les jetons numériques TN1-TN20 disponibles, qui comprend des données de clé C_{EC} satisfaisant la condition temporelle de validité imposée par EXPmin. Le terminal DV1 détermine si des données de clé C_{EC} contenues dans un jeton numérique TN respectent cette deuxième condition temporelle EXPmin à partir de la première donnée temporelle EXP associée aux données de clé C_{EC} dans le jeton numérique TN en question.

A titre d'exemple, la deuxième donnée temporelle EXPmin indique un temps restant minimal (par exemple une date d'expiration minimal) pendant lequel des données de clé C_{EC} sélectionnées (et donc la clé cryptographique K_{EC} correspondante) doit être valide. Le deuxième dispositif DV2 peut ainsi demander, via la deuxième donnée temporelle EXPmin, que le terminal DV1 sélectionne en S44 un jeton numérique TN dont la clé cryptographique KEC expire par exemple dans au moins 2 heure. A partir de la valeur de la donnée temporelle EXPmin, le terminal DV1 peut ainsi sélectionner en S44 un jeton numérique TN approprié.

Selon un exemple particulier, le terminal DV1 sélectionne en S44 un nouveau jeton numérique TN à chaque itération du procédé d'authentification, c'est-à-dire à chaque nouvelle réception (S42) de premières données DT1.

Une fois la sélection S44 effectuée, le terminal DV1 envoie (S46) au deuxième dispositif DV2 des deuxièmes données DT2 comprenant la deuxième donnée de défi CH2, la première donnée temporelle EXP et l'identifiant ID extraits du jeton numérique TN sélectionné en S44. Autrement dit, l'étape S46 d'envoi diffère de l'étape S6 **(****figure 6****)** décrite précédemment en ce que les deuxièmes données DT2 comprennent, en plus de la deuxième donnée de défi CH2, les données EXP et ID spécifiées dans le jeton numérique TN sélectionnée en S44. Dans ce cas, la deuxième donnée de défi CH2 transmise est donc distincte des données EXP et ID comprises dans les deuxièmes données DT2.

Selon un exemple particulier, le terminal DV1 signe les deuxièmes données DT2 avec une clé privée SKm avant de les envoyer au deuxième dispositif DV2. Selon un autre exemple, la signature des deuxièmes données DT2 est réalisée par le serveur SV1 puis reçue et stockée avec le jeton numérique associé dans le premier dispositif DV1. Le second dispositif DV2, qui dispose d'une clé publique PKm associée à la clé privée SKm, peut alors vérifier la signature. Le deuxième dispositif DV2 accepte de poursuivre le procédé d'authentification que si la signature est vérifiée avec succès. Cette variante permet notamment d'éviter d'éventuelles attaques de type DoS (pour « Deny of Service ») qui visent à bloquer le deuxième dispositif DV2 de sorte à ce que l'utilisateur UR légitime ne puisse pas s'authentifier et soit donc privé du service considéré. Une telle attaque serait éventuellement possible si un attaquant, se faisant passer pour le terminal DV1, envoyait au deuxième dispositif DV2, dans les premières données temporelles DT1, une valeur arbitraires ou erronée de la première donnée temporelle EXP. Dans un tel cas, le deuxième dispositif DV2 pourrait par la suite refuser des jetons numérique TN qui n'ont pas une validité allant au moins jusqu'à l'instant de fin de validité indiqué par le dernier EXP reçu.

Par ailleurs, une fois les deuxièmes données DT2 reçues, le deuxième dispositif DV2 vérifie (S48), à partir de ces deuxièmes données DT2, la validité du jeton numérique TN (et donc de la clé cryptographique K_{EC}) que le terminal DV1 a sélectionné en S44. Plus précisément, dans l'exemple considéré ici, le deuxième dispositif DV2 vérifie en S48, à partir de la première donnée temporelle EXP et de l'identifiant ID qui sont contenus dans les deuxièmes données DT2 reçues, la validité du jeton numérique TN sélectionné par le terminal DV1. Le deuxième dispositif DV2 vérifie par exemple, à partir des données EXP et ID, que le jeton numérique TN choisi en S44 par le terminal DV1 n'a pas déjà été utilisé par le terminal DV1 ou par un autre terminal. Lors de cette vérification, le deuxième dispositif DV2 peut notamment comparer la première donnée temporelle EXP reçue en S46 avec la deuxième donnée temporelle EXPmin contenue dans les données DT1 envoyées au terminal DV1 en S42, pour vérifier si la première donnée temporelle EXP satisfait la condition temporelle de validité imposée par EXPmin. Comme déjà indiqué, pour que le jeton numérique TN soit valide, il faut en effet que la première donnée temporelle EXP associée aux données de clé C_{EC} du jeton numérique TN satisfasse la condition temporelle de validité imposée par EXPmin.

Si le deuxième dispositif DV2 détermine en S48 que le jeton numérique TN sélectionné par le terminal DV1 est valide, le procédé se poursuit alors à l'étape S50 de calcul. Dans le cas contraire, l'authentification du terminal DV1 échoue et le procédé d'authentification prend fin (ou éventuellement le deuxième dispositif avertit le terminal DV1 de l'échec et lui demande de sélectionner un autre jeton numérique TN respectant la deuxième donnée temporelle EXPmin).

Au cours de l'étape S50 de calcul, le deuxième dispositif DV2 calcule (ou détermine) une clé de démasquage K2 à partir de la deuxième donnée de défi CH2 reçue dans les deuxièmes données DT2 reçues en S46. Cette étape S50 de calcul peut être réalisée de la même manière qu'à l'étape S8 **(****figure 6****)** précédemment décrite, en exécutant un algorithme de chiffrement AL1. Comme déjà indiqué, le deuxième dispositif DV2 peut également prendre en compte d'autres entrées, telles qu'une clé TK, lors de l'exécution de l'algorithme de chiffrement AL1.

Au cours de l'étape S50 de calcul, la clé de démasquage K2 peut être déterminée en exécutant l'algorithme de chiffrement AL1 prenant en entrée, en plus de la deuxième donnée de défi CH2 (et éventuellement de la clé TK), la première donnée temporelle EXP et l'identifiant ID. Cela permet de renforcer encore davantage la sécurité du calcul de la clé de démasquage K2. Cela permet en particulier d'éviter qu'un attaquant puisse réutiliser un jeton numérique qui a expiré en modifiant la donnée temporelle EXP (une date par exemple) ou l'identifiant ID envoyés au deuxième dispositif DV2. Dans un tel cas, la clé de démasquage K2 déterminée en S50 serait alors différente de celle censée fonctionner pour le jeton numérique TN en question.

Le deuxième dispositif DV2 envoie (S10) ensuite la clé de démasquage K2 au terminal DV1.

A noter que dans l'exemple considéré ici, le terminal DV1 inclus, dans les deuxièmes données DT2 envoyées en S46 au deuxième dispositif DV2, une deuxième donnée de défi CH2 en plus de la premières donnée temporelle EXP et de l'identifiant ID (autrement dit, ce ne sont pas les données EXP et ID qui jouent le rôle de deuxième donnée de défi). Les données EXP et ID permettent au deuxième dispositif DV2 de vérifier la validité du jeton numérique TN sélectionné tandis que la deuxième donnée de défi CH2 permet au deuxième dispositif DV2 de calculer la clé de démasquage K2. Des variantes sont toutefois possibles dans lesquelles le terminal DV1 n'inclus pas, dans les deuxièmes données DT2 transmises (S46) au deuxième dispositif DV2, une deuxième donnée de défi CH2 en plus des données EXP et ID. Dans ce cas, ce sont les données EXP et ID (ou au moins l'une parmi ces deux données) qui font office de deuxième donnée de défi et qui sont donc utilisées par le deuxième dispositif DV2 en S50 pour déterminer la clé de démasquage K2. L'inclusion dans les deuxièmes données DT2 d'une deuxième donnée de défi CH2 en plus de la première donnée temporelle EXP et de l'identifiant ID est toutefois avantageuse en ce que cela permet d'éviter tous éventuels problèmes de collision dans l'usage des différents jetons numériques TN. De manière générale, de tels problèmes de collision peuvent être évités en instaurant un mécanisme permettant de garantir que chaque couple (EXP, ID) est unique dans les jetons numérique TN déployés. A partir du couple (EXP, ID) reçus dans les deuxièmes données DT2, le deuxième dispositif DV2 peut alors déterminer si le jeton numérique TN correspondant est toujours valide.

En variante, les deuxièmes données DT2 transmises en S46 au deuxième dispositif DV2 peuvent comprendre seulement l'identifiant ID faisant alors office de deuxième donnée de défi (sans inclure la première donnée temporelle EXP ni la donnée CH2 dans les deuxièmes données DT2 transmises en S46). Dans ce cas particulier, le deuxième dispositif DV2 utilise l'identifiant ID en tant que deuxième donnée de défi pour déterminer en S50 la clé de démasquage K2. Quelle que soit l'implémentation envisagée, le second dispositif DV2 doit de préférence pouvoir vérifier en S48 qu'un même jeton numérique TN n'est pas utilisé deux fois.

Selon un exemple particulier, le terminal DV1 envoie en S46, pour chaque nouvelle itération du procédé, une deuxième donnée de défi CH2 différente. Autrement dit, le terminal DV1 envoie en S46 une deuxième donnée de défi CH2 différente pour chaque jeton numérique TN utilisé pour authentifier le terminal DV1 (auprès du deuxième dispositif DV2 ou d'un quelconque autre dispositif).

Par ailleurs, une fois la clé de démasquage K2 reçue en S10, le terminal DV1 réalise les étapes S12, S14, S16 et S18 comme déjà décrit précédemment en référence à la **figure 6****.** On suppose ici à titre d'exemple que la fonction de démasquage F2 utilisée est la fonction XOR comme déjà mentionné ci-avant.

Le deuxième dispositif DV2 reçoit ainsi la donnée de réponse ANS1 en S18. Dans cet exemple, le deuxième dispositif DV2 détermine, au cours d'une étape S60 de détermination, la clé cryptographique K_{EC} qui est utilisée par le terminal DV1, c'est-à-dire celle correspondant au jeton numérique TN sélectionnée par le terminal DV1 en S44. Pour ce faire, le deuxième dispositif DV2 dérive (S60) la clé cryptographique K_{EC} à partir de la clé cryptographique maîtresse MK (stocké dans la mémoire 26 dans cet exemple), et éventuellement aussi à partir des données EXP, ID et/ou CH2 (c'est-à-dire au moins l'une d'elles, par exemple EXP et ID, ou EXP et CH2, ou encore ID et CH2 ou EXP, ID et CH2) qui ont été précédemment reçues en S46 dans les deuxièmes données DT2.

Le deuxième dispositif DV2 poursuit ensuite le procédé en réalisant les étapes S20, S22, S24 et S26 comme déjà décrit précédemment en référence à la **figure 6****.** En particulier, le deuxième dispositif DV2 calcule (S22) une donnée de réponse théorique ANS1a par un chiffrement (ou plus généralement par une opération cryptographique) en exécutant l'algorithme cryptographique prédéterminé ALp à partir de la clé cryptographique K_{EC} calculée en S60 et à partir de la donnée de défi CH1 précédemment envoyée en S42. Le deuxième dispositif DV2 compare (S24) ensuite la donnée de réponse ANS1 reçue en S18 avec la donnée de réponse théorique ANS1a et en déduit que l'authentification passe avec succès s'il y a correspondance entre ANS1 et ANS1a.

Selon le mode de réalisation représenté en **figure 8****,** on suppose à nouveau que le premier dispositif DV1 (nommé ci-après « terminal ») et le deuxième dispositif DV2 précédemment décrits en référence aux **figures 2-5** coopèrent ensemble pour permettre notamment au premier dispositif DV1 de s'authentifier auprès du deuxième dispositif DV2. Pour ce faire, le terminal DV1 met en œuvre un procédé de traitement (ou procédé d'authentification), en coopération le deuxième dispositif DV2, en exécutant le programme d'ordinateur PG1. De même, le deuxième dispositif DV2 exécute le programme d'ordinateur PG2 pour authentifier le terminal DV1.

La variante représentée en **figure 8** diffère du mode de réalisation de la **figure 7** en ce qu'une clé KRand encodée dans un format adapté à l'implémentation en boîte blanche est en outre utilisée par le terminal DV1, en entrée de l'algorithme de déchiffrement pdec implémenté en boîte blanche, pour déterminer la clé cryptographique K_{EC} (sous sa forme déchiffrée). Cette clé KRand n'est ainsi utilisable que par l'implémentation en boite blanche considérée. Pour ce faire, la clé KRand peut avoir subi une quelconque transformation appropriée (par exemple un chiffrement ou une transformation sous la forme d'une table réalisant une opération dans laquelle la clé est cachée) de sorte à ce que ladite clé KRand ne soit compréhensible ou utilisable que par l'implémentation de la boite blanche en question.

Plus précisément, comme représenté en **figure 8****,** le terminal DV1 reçoit (ou obtient), au cours d'une étape S80 de réception (ou d'obtention), une pluralité de jetons numériques TN, chacun d'eux comprenant des données de clé C_{EC} en association avec une donnée de défi CH2, une première donnée temporelle EXP, un identifiant ID de clé et une clé cryptographique KRand encodée dans un format adapté à l'implémentation en boîte blanche, notée wb[KRand]. Autrement dit, les jetons numériques TN diffèrent de ceux décrits en référence à la **figure 7** en ce qu'ils comprennent également une clé KRand encodée dans un format adapté à l'implémentation en boîte blanche, en association avec les autres éléments déjà énumérés. Cette clé KRand est donc elle-même sécurisée afin de la protéger contre d'éventuelles attaques.

La clé KRand associée à chaque donnée de clé D_{EC} est par exemple une clé aléatoire.

On suppose ensuite que le terminal DV1 et le deuxième dispositif DV2 réalisent ensemble les étapes S42 à S50 et les étapes S10 et S12 comme déjà décrit ci-avant en référence à la **figure 7****.**

Au cours d'une étape S86 de détermination, le terminal DV1 détermine alors la clé cryptographique K_{EC} sous sa forme déchiffrée (en clair). Pour ce faire, le terminal DV1 réalise un déchiffrement en exécutant un algorithme cryptographique pdec de déchiffrement implémenté en boîte blanche à partir de la clé cryptographique chiffrée D_{EC} (obtenue en S12) et à partir de la clé KRand implémentée en boîte blanche qui a été extraite du jeton numérique TN sélectionné en S44. Autrement dit, le terminal DV1 exécute l'implémentation en boîte blanche wb[pdec] de l'algorithme de déchiffrement pdec en prenant en entrée la clé cryptographique chiffrée D_{EC} et l'implémentation en boîte blanche wb[KRand] de la clé KRand de sorte à produire en sortie la clé cryptographique K_{EC} en clair.

Une fois la clé cryptographique K_{EC} déterminée (sous sa forme déchiffrée), le terminal DV1 et la deuxième dispositif DV2 poursuivent le procédé de traitement en exécutant les étapes S16, S18, S60 et S20 à S26 comme déjà décrit en référence à la **figure 7****.**

Cette variante prévoit donc de fournir en outre dans les jetons numériques TN des clés KRand implémentées en boîte blanche, ce qui permet de sécuriser encore davantage le procédé de traitement de l'invention.

A noter d'autre part que l'ordre dans lequel s'enchaînent les étapes du procédé de traitement tel que décrits précédemment en référence notamment aux **figures 6** à **8** ne constitue qu'un exemple de réalisation, des variantes étant possibles.

## Revendications

1. Procédé de traitement mis en œuvre par un premier dispositif (DV1) coopérant avec un deuxième dispositif (DV2), ledit procédé comprenant :
a) Réception (S2), en provenance du deuxième dispositif, de premières données (DT1) comprenant une première donnée de défi (CH1) ;
b) obtention (S4) de données de clé (C_{EC}) comprenant une clé cryptographique chiffrée (D_{EC}) résultant d'un chiffrement par un premier algorithme de chiffrement (penc), lesdites données de clé étant masquées par exécution d'une fonction cryptographique de masquage (F1) à partir de la clé cryptographique chiffrée et d'une clé de masquage (K1) ;
c) réception (S10), en provenance du deuxième dispositif, d'une clé de démasquage (K2) ;
d) détermination (S12) de la clé cryptographique chiffrée (D_{EC}) en exécutant une fonction cryptographique de démasquage (F2) à partir des données de clé obtenues en b) et de la clé de démasquage (K2) reçue en c) ;
e) détermination (S14) d'une clé cryptographique déchiffrée (K_{EC}) par un déchiffrement en exécutant un premier algorithme de déchiffrement (pdec) implémenté en boîte blanche à partir de la clé cryptographique chiffrée (D_{EC}), le premier algorithme de chiffrement (penc) et le premier algorithme de déchiffrement (pdec) étant des algorithmes cryptographiques associés configurés pour effectuer des fonctions cryptographiques inverses ;
f) détermination (S16) d'une donnée de réponse (ANS1) par une opération cryptographique en exécutant un algorithme cryptographique prédéterminé (ALp) à partir de la clé cryptographique déchiffrée (K_{EC}) et de la première donnée de défi (CH1) reçue ; et
g) envoi (S18) au deuxième dispositif, en réponse aux premières données (DT1) reçues en a), de la donnée de réponse (ANS1) pour authentifier le premier dispositif auprès du deuxième dispositif.

2. Procédé selon la revendication 1, dans lequel les premiers algorithmes de chiffrement (penc) et de déchiffrement (pdec) sont différents de l'algorithme cryptographique prédéterminé (ALp).

3. Procédé selon la revendication 1 ou 2 comprenant en outre, avant la réception c) de la clé de démasquage (K2) :
h) envoi, au deuxième dispositif, de deuxièmes données (DT2) comprenant une deuxième donnée de défi (CH2, EXP, ID) ;
dans lequel la clé de démasquage (K2) reçue en c) depuis le deuxième dispositif est calculée à partir de la deuxième donnée de défi.

4. Procédé selon la revendication 3, le procédé comprenant, avant h) : i) obtention d'un jeton numérique (TN), comprenant :
- les données de clé (C_{EC}) ;
- une première donnée temporelle (EXP) indiquant une période de validité au cours de laquelle la clé cryptographique (K_{EC}) est valide ; et
- un identifiant (ID) de ladite clé cryptographique utilisable pendant ladite période de validité ;
dans lequel les deuxième données (DT2) envoyées en h) comprennent la première donnée temporelle (EXP) et l'identifiant (ID) extraits du jeton numérique.

5. Procédé selon la revendication 4, comprenant en outre :
j) sélection, à partir d'une deuxième donnée temporelle (EXPmin) comprise dans les premières données (DT1) reçue en a), du jeton numérique obtenu en i) parmi un ou des jetons numériques accessibles par le premier dispositif,
ladite deuxième donnée temporelle étant indicative d'une période de validité dans laquelle la clé cryptographique, du jeton numérique sélectionné, doit être valide.

6. Procédé selon la revendication 4 ou 5, dans lequel le jeton
numérique obtenue en i) comprend en outre la deuxième donnée de défi (CH2) qui est distincte de la première donnée temporelle (EXP) et de l'identifiant (ID) ;
dans lequel les deuxièmes données (DT2) envoyées en h) comprennent la deuxième donnée de défi (CH2) extraite du jeton numérique.

7. Procédé selon la revendication 4 ou 5, dans lequel la première donnée temporelle (EXP) et l'identifiant (ID) compris dans les deuxièmes données (DT2) envoyées en h) constituent la deuxième donnée de défi.

8. Procédé selon l'une quelconque des revendications 4 à 7, dans lequel le jeton numérique (TN) comprend en outre une clé encodée dans un format adapté à l'implémentation en boîte blanche (wb[KRand]),
dans lequel, en e), la clé cryptographique déchiffrée (K_{EC}) est déterminée par un déchiffrement en exécutant le premier algorithme de déchiffrement (pdec) implémenté en boîte blanche à partir de la clé cryptographique chiffrée (D_{EC}) et de la clé encodée dans un format adapté à l'implémentation en boîte blanche (wb[KRand]) extraite du jeton numérique.

9. Procédé selon l'une quelconque des revendications 1 à 8, dans lequel les fonctions cryptographiques de masquage et de démasquage (F1, F2) sont respectivement des fonctions associées de chiffrement et de déchiffrement.

10. Procédé selon la revendication 9, dans lequel les fonctions cryptographiques de masquage et de démasquage (F1, F2) sont des fonctions de chiffrement symétriques, la clé de masquage (K1) et la clé de démasquage (K2) étant identiques.

11. Procédé selon la revendication 9 ou 10, dans lequel Les fonctions cryptographiques de masquage et de démasquage (F1, F2) sont des fonctions XOR.

12. Procédé selon l'une quelconque des revendications 1 à 11, dans lequel le procédé comprend, suite à g) :
k) en réponse à une détection que le premier dispositif est authentifié avec succès auprès du deuxième dispositif, déclenchement d'une fonction prédéterminée en coopération avec le deuxième dispositif.

13. Programme d'ordinateur (PG1) comportant des instructions pour l'exécution des étapes d'un procédé selon l'une quelconque des revendications 1 à 12 lorsque ledit programme est exécuté par un ordinateur.

14. Premier dispositif (DV1) apte à coopérer avec un deuxième dispositif (DV2), comprenant :
- premier module de réception (MD2) configuré pour recevoir, en provenance du deuxième dispositif, des premières données (DT1) comprenant une première donnée de défi (CH1) ;
- module d'obtention (MD4) configuré pour obtenir des données de clé (C_{EC}) comprenant une clé cryptographique chiffrée (D_{EC}) résultant d'un chiffrement par un premier algorithme de chiffrement (penc), lesdites données de clé étant masquées par exécution d'une fonction cryptographique de masquage (F1) à partir de la clé cryptographique chiffrée et d'une clé de masquage (K1) ;
- deuxième module de réception (MD6) configuré pour recevoir, en provenance du deuxième dispositif, une clé de démasquage (K2) ;
- premier module de détermination (MD8) configuré pour déterminer la clé cryptographique chiffrée (D_{EC}) en exécutant une fonction cryptographique de démasquage (F2) à partir des données de clé (C_{EC}) obtenues et de la clé de démasquage (K2) reçue ;
- deuxième module de détermination (MD10) configuré pour déterminer une clé cryptographique déchiffrée (K_{EC}) par un déchiffrement en exécutant un premier algorithme de déchiffrement (pdec) implémenté en boîte blanche à partir de la clé cryptographique chiffrée (D_{EC}), le premier algorithme de chiffrement (penc) et le premier algorithme de déchiffrement (pdec) étant des algorithmes cryptographiques associés configurés pour effectuer des fonctions cryptographiques inverses ;
- troisième module de détermination (MD12) configuré pour déterminer une donnée de réponse (ANS1) par une opération cryptographique en exécutant un algorithme cryptographique prédéterminé (ALp) à partir de la clé cryptographique déchiffrée (K_{EC}) et de la première donnée de défi (CH1) reçue ; et
- module d'envoi configuré pour envoyer au deuxième dispositif, en réponse aux premières données (DT1) reçues, la donnée de réponse (ANS1) pour authentifier le premier dispositif auprès du deuxième dispositif.

## Patentansprüche

1. Verarbeitungsverfahren, das durch eine erste Vorrichtung (DV1) durchgeführt wird, die mit einer zweiten Vorrichtung (DV2) zusammenarbeitet, wobei das Verfahren umfasst:
a) Empfangen (S2) erster Daten (DT1), die einen ersten Challenge-Datenwert (CH1) umfassen, von der zweiten Vorrichtung;
b) Erhalten (S4) von Schlüsseldaten (C_{EC}), die einen verschlüsselten krypotgraphischen Schlüssel (D_{EC}) umfassen, der aus einer Verschlüsselung durch einen ersten Verschlüsselungsalgorithmus (penc) resultiert, wobei die Schlüsseldaten durch Ausführung einer kryptographischen Maskierungsfunktion (F1) auf Grundlage des verschlüsselten kryptographischen Schlüssels und eines Maskierungsschlüssels (K1) maskiert werden;
c) Empfangen (S10) eines Demaskierungsschlüssels (K2) von der zweiten Vorrichtung;
d) Bestimmen (S12) des verschlüsselten kryptographischen Schlüssels (D_{EC}) durch Ausführen einer kryptographischen Demaskierungsfunktion (F2) auf Grundlage der in b) erhaltenen Schlüsseldaten und des in c) empfangenen Demaskierungsschlüssels (K2);
e) Bestimmen (S14) eines entschlüsselten kryptographischen Schlüssels (K_{EC}) durch eine Entschlüsselung durch Ausführen eines ersten Entschlüsselungsalgorithmus (pdec), der in einer Whitebox auf Grundlage des verschlüsselten kryptographischen Schlüssels (D_{EC}) implementiert wird, wobei der erste Verschlüsselungsalgorithmus (penc) und der erste Entschlüsselungsalgorithmus (pdec) zusammengehörige kryptographische Algorithmen sind, die dazu ausgelegt sind, umgekehrte kryptographische Funktionen durchzuführen;
f) Bestimmen (S16) eines Antwortdatenwertes (ANS1) durch eine kryptographische Operation durch Ausführen eines vorbestimmten kryptographischen Algorithmus (ALp) auf Grundlage des entschlüsselten kryptographischen Schlüssels (K_{EC}) und des empfangenen ersten Challenge-Datenwertes (CH1); und
g) Senden (S18) des Antwortdatenwertes (ANS1) an die zweite Vorrichtung als Antwort auf die in a) empfangenen ersten Daten (DT1), um die erste Vorrichtung bei der zweiten Vorrichtung zu authentifizieren.

2. Verfahren nach Anspruch 1, wobei die ersten Verschlüsselungs- (penc) und Entschlüsselungsalgorithmen (pdec) von dem vorbestimmten kryptographischen Algorithmus (ALp) verschieden sind.

3. Verfahren nach Anspruch 1 oder 2, vor dem Empfangen c) des Demaskierungsschlüssels (K2) außerdem umfassend:
h) Senden zweiter Daten (DT2), die einen zweiten Challenge-Datenwert (CH2, EXP, ID) umfassen, an die zweite Vorrichtung;
wobei der Demaskierungsschlüssel (K2), der in c) von der zweiten Vorrichtung empfangen wurde, auf Grundlage des zweiten Challenge-Datenwertes berechnet wird.

4. Verfahren nach Anspruch 3, wobei das Verfahren vor h) umfasst:
i) Erhalten eines digitalen Tokens (TN) , umfassend:
- die Schlüsseldaten (C_{EC}) ;
- einen ersten zeitlichen Datenwert (EXP), der einen Gültigkeitszeitraum angibt, in dem der kryptographische Schlüssel (K_{EC}) gültig ist; und
- eine Kennung (ID) des kryptographischen Schlüssels, der während des Gültigkeitszeitraums nutzbar ist;
wobei die in h) gesendeten zweiten Daten (DT2) den ersten zeitlichen Datenwert (EXP) und die dem digitalen Token entnommene Kennung (ID) umfassen.

5. Verfahren nach Anspruch 4, außerdem umfassend:
j) Auswählen des in i) enthaltenen digitalen Tokens aus einem oder mehreren digitalen Token, die durch die erste Vorrichtung zugänglich sind, auf Grundlage eines zweiten zeitlichen Datenwertes (EXPmin), der in den in a) empfangenen ersten Daten (DT1) enthalten ist,
wobei der zweite zeitliche Datenwert einen Gültigkeitszeitraum angibt, in dem der kryptographische Schlüssel des ausgewählten digitalen Tokens gültig sein soll.

6. Verfahren nach Anspruch 4 oder 5, wobei der in i) enthaltene digitale Token außerdem den zweiten Challenge-Datenwert (CH2) umfasst, der vom ersten zeitlichen Datenwert (EXP) und von der Kennung (ID) verschieden ist; wobei die in h) gesendeten zweiten Daten (DT2) den dem digitalen Token entnommenen zweiten Challenge-Datenwert (CH2) umfassen.

7. Verfahren nach Anspruch 4 oder 5, wobei der erste zeitliche Datenwert (EXP) und die Kennung (ID), die in den in h) gesendeten zweiten Daten (DT2) enthalten sind, den zweiten Challenge-Datenwert bilden.

8. Verfahren nach einem der Ansprüche 4 bis 7, wobei der digitale Token (TN) außerdem einen Schlüssel umfasst, der in einem Format codiert ist, das für die Implementierung in einer Whitebox (wb[KRand]) geeignet ist,
wobei in e) der entschlüsselte kryptographische Schlüssel (K_{EC}) bestimmt wird durch eine Entschlüsselung durch Ausführen des ersten Entschlüsselungsalgorithmus (pdec), der in einer Whitebox auf Grundlage des dem digitalen Token entnommenen verschlüsselten kryptographischen Schlüssels (D_{EC}) und des in einem Format codierten Schlüssels, das für die Implementierung in einer Whitebox (wb[KRand]) geeignet ist, implementiert wird.

9. Verfahren nach einem der Ansprüche 1 bis 8, wobei die kryptographischen Maskierungs- und Demaskierungsfunktionen (F1, F2) jeweils Funktionen sind, die mit Verschlüsselung und Entschlüsselung assoziiert sind.

10. Verfahren nach Anspruch 9, wobei die kryptographischen Maskierungs- und Demaskierungsfunktionen (F1, F2) symmetrische Verschlüsselungsfunktionen sind, wobei der Maskierungsschlüssel (K1) und der Demaskierungsschlüssel (K2) identisch sind.

11. Verfahren nach Anspruch 9 oder 10, wobei die kryptographischen Maskierungs- und Demaskierungsfunktionen (F1, F2) XOR-Funktionen sind.

12. Verfahren nach einem der Ansprüche 1 bis 11, wobei das Verfahren nach g) umfasst:
k) als Antwort auf eine Erkennung, dass die erste Vorrichtung bei der zweiten Vorrichtung authentifiziert ist, Auslösen einer vorbestimmten Funktion in Zusammenarbeit mit der zweiten Vorrichtung.

13. Computerprogramm (PG1), das Anweisungen zur Ausführung von Schritten eines Verfahrens nach einem der Ansprüche 1 bis 12 umfasst, wenn das Programm auf einem Computer ausgeführt wird.

14. Erste Vorrichtung (DV1), die dazu fähig ist, mit einer zweiten Vorrichtung (DV2) zusammenzuarbeiten, umfassend:
- erstes Empfangsmodul (MD2), das dazu ausgelegt ist, erste Daten (DT1), die einen ersten Challenge-Datenwert (CH1) umfassen, von der zweiten Vorrichtung zu empfangen;
- Erhaltensmodul (MD4), das dazu ausgelegt ist, Schlüsseldaten (C_{EC}) zu erhalten, die einen verschlüsselten krypotgraphischen Schlüssel (D_{EC}) umfassen, der aus einer Verschlüsselung durch einen ersten Verschlüsselungsalgorithmus (penc) resultiert, wobei die Schlüsseldaten durch Ausführung einer kryptographischen Maskierungsfunktion (F1) auf Grundlage des verschlüsselten kryptographischen Schlüssels und eines Maskierungsschlüssels (K1) maskiert werden;
- zweites Empfangsmodul (MD6), das dazu ausgelegt ist, einen Demaskierungsschlüssel (K2) von der zweiten Vorrichtung zu empfangen;
- erstes Bestimmungsmodul (MD8), das dazu ausgelegt ist, den verschlüsselten kryptographischen Schlüssel (D_{EC}) durch Ausführen einer kryptographischen Demaskierungsfunktion (F2) auf Grundlage der in erhaltenen Schlüsseldaten (C_{EC}) und des empfangenen Demaskierungsschlüssels (K2) zu bestimmen;
- zweites Bestimmungsmodul (MD10), das dazu ausgelegt ist, einen entschlüsselten kryptographischen Schlüssel (K_{EC}) durch eine Entschlüsselung durch Ausführen eines ersten Entschlüsselungsalgorithmus (pdec), der in einer Whitebox auf Grundlage des verschlüsselten kryptographischen Schlüssels (D_{EC}) implementiert wird, zu bestimmen, wobei der erste Verschlüsselungsalgorithmus (penc) und der erste Entschlüsselungsalgorithmus (pdec) zusammengehörige kryptographische Algorithmen sind, die dazu ausgelegt sind, umgekehrte kryptographische Funktionen durchzuführen;
- drittes Bestimmungsmodul (MD12), das dazu ausgelegt ist, einen Antwortdatenwert (ANS1) durch eine kryptographische Operation durch Ausführen eines vorbestimmten kryptographischen Algorithmus (ALp) auf Grundlage des entschlüsselten kryptographischen Schlüssels (K_{EC}) und des empfangenen ersten Challenge-Datenwertes (CH1) zu bestimmen; und
- Sendemodul, das dazu ausgelegt ist, als Antwort auf die empfangenen ersten Daten (DT1) den Antwortdatenwert (ANS1) an die zweite Vorrichtung zu senden, um die erste Vorrichtung bei der zweiten Vorrichtung zu authentifizieren.

## Claims

1. Processing method implemented by a first device (DV1) cooperating with a second device (DV2), said method comprising:
a) receiving (S2), from the second device, first data (DT1) comprising a first challenge data (CH1);
b) obtaining (S4) key data (C_{EC}) comprising an encrypted cryptographic key (D_{EC}) resulting from encryption by a first encryption algorithm (penc), said key data being masked by executing a cryptographic masking function (F1) from the encrypted cryptographic key and a masking key (K1) ;
c) receiving (S10), from the second device, an unmasking key (K2);
d) determining (S12) the encrypted cryptographic key (D_{EC}) by executing a cryptographic unmasking function (F2) using the key data obtained in b) and the unmasking key (K2) received in c);
e) determining (S14) a decrypted cryptographic key (K_{EC}) by decrypting by executing a first decryption algorithm (pdec) implemented in a white box from the encrypted cryptographic key (D_{EC}), the first encryption algorithm (penc) and the first decryption algorithm (pdec) being associated cryptographic algorithms configured to perform inverse cryptographic functions;
f) determining (S16) a response data (ANS1) by a cryptographic operation by executing a predetermined cryptographic algorithm (ALp) from the decrypted cryptographic key (K_{EC}) and the first challenge data (CH1) received; and
g) sending (S18) to the second device, in response to the first data (DT1) received in a), the response data (ANS1) to authenticate the first device to the second device.

2. Method according to Claim 1, wherein the first encryption (penc) and decryption (pdec) algorithms are different from the predetermined cryptographic algorithm (ALp).

3. Method according to Claim 1 or 2, further comprising, prior to receiving c) the unmasking key (K2):
h) sending, to the second device, second data (DT2) comprising second challenge data (CH2, EXP, ID);
wherein the unmasking key (K2) received in c) from the second device is calculated from the second challenge data.

4. Method according to Claim 3, the method comprising, before h):
i) obtaining a digital token (TN), comprising:
- the key data (C_{EC}) ;
- first time data (EXP) indicating a validity period during which the cryptographic key (K_{EC}) is valid; and
- an identifier (ID) of said cryptographic key usable during said period of validity;
wherein the second data (DT2) sent in h) comprises the first time data (EXP) and the identifier (ID) extracted from the digital token.

5. Method according to Claim 4, further comprising:
j) selecting, from a second time data (EXPmin) included in the first data (DT1) received in a), the digital token obtained in i) from among one or more digital tokens accessible by the first device, said second time data being indicative of a validity period during which the cryptographic key of the selected digital token must be valid.

6. Method according to Claim 4 or 5, wherein the digital token obtained in i) further comprises the second challenge data (CH2) which is distinct from the first time data (EXP) and the identifier (ID); wherein the second data (DT2) sent in h) comprises the second challenge data (CH2) extracted from the digital token.

7. Method according to Claim 4 or 5, wherein the first time data (EXP) and the identifier (ID) included in the second data (DT2) sent in h) constitute the second challenge data.

8. Method according to one of Claims 4 to 7, wherein the digital token (TN) further comprises a key encoded in a format suitable for white box implementation (wb[KRand]), wherein, in e), the decrypted cryptographic key (K_{EC}) is determined by decryption by executing the first decryption algorithm (pdec) implemented in white box from the encrypted cryptographic key (D_{EC}) and the key encoded in a format suitable for white box implementation (wb[KRand]) extracted from the digital token.

9. Method according to one of Claims 1 to 8, wherein the cryptographic masking and unmasking functions (F1, F2) are respectively associated encryption and decryption functions.

10. Method according to Claim 9, wherein the cryptographic masking and unmasking functions (F1, F2) are symmetric encryption functions, the masking key (K1) and the unmasking key (K2) being identical.

11. Method according to Claim 9 or 10, wherein the cryptographic masking and unmasking functions (F1, F2) are XOR functions.

12. Method according to one of Claims 1 to 11, wherein the method comprises, following g) :
k) in response to a detection that the first device is successfully authenticated with the second device, triggering a predetermined function in cooperation with the second device.

13. Computer program (PG1) comprising instructions for executing the steps of a method according to one of Claims 1 to 12 when said program is executed by a computer.

14. First device (DV1) capable of cooperating with a second device (DV2), comprising:
- a first receiving module (MD2) configured to receive, from the second device, first data (DT1) comprising first challenge data (CH1);
- an obtaining module (MD4) configured to obtain key data (C_{EC}) comprising an encrypted cryptographic key (D_{EC}) resulting from encryption by a first encryption algorithm (penc), said key data being masked by executing a cryptographic masking function (F1) from the encrypted cryptographic key and a masking key (K1);
- a second receiving module (MD6) configured to receive, from the second device, an unmasking key (K2);
- a first determination module (MD8) configured to determine the encrypted cryptographic key (D_{EC}) by executing a cryptographic unmasking function (F2) using the key data (C_{EC}) obtained and the unmasking key (K2) received;
- a second determination module (MD10) configured to determine a decrypted cryptographic key (K_{EC}) by decryption by executing a first decryption algorithm (pdec) implemented in a white box from the encrypted cryptographic key (D_{EC}), the first encryption algorithm (penc) and the first decryption algorithm (pdec) being associated cryptographic algorithms configured to perform inverse cryptographic functions;
- a third determination module (MD12) configured to determine a response data (ANS1) by a cryptographic operation by executing a predetermined cryptographic algorithm (ALp) from the decrypted cryptographic key (K_{EC}) and the first challenge data (CH1) received; and
- a sending module configured to send the response data (ANS1) to the second device in response to the first data (DT1) received, in order to authenticate the first device to the second device.
